# EUROPÄISCHE PATENTSCHRIFT

(11) **EP 1 483 589 B1**
(45) Veröffentlichungstag und Bekanntmachung des Hinweises auf die Patenterteilung: **13.01.2010**
(21) Anmeldenummer: 02716719.6
(22) Anmeldetag: 01.02.2002
(51) Int. Cl.: G01N 35/00

(54) **VORRICHTUNG UND VERFAHREN ZUR AUTOMATISCHEN ANALYSE DER BESTANDTEILE EINES ANALYTEN**
DEVICE AND METHOD FOR AUTOMATICALLY ANALYSING THE CONSTITUENTS OF AN ANALYTE
DISPOSITIF ET PROCEDE D'ANALYSE AUTOMATIQUE DES CONSTITUANTS D'UNE SUBSTANCE A ANALYSER

(30) Priorität: 01.02.2001 DE 10104821; 08.05.2001 DE 10122323; 29.05.2001 DE 10126282
(43) Veröffentlichungstag der Anmeldung: 08.12.2004
(73) Patentinhaber: Schlichting, Hartmut, 82205 Gilching (DE)
(72) Erfinder: Schlichting, Hartmut, 82205 Gilching (DE)
(74) Vertreter: Schneider, Günther Martin
(86) Internationale Anmeldenummer: PCT/EP2002/001098
(87) Internationale Veröffentlichungsnummer: WO 2002/061408

(56) Entgegenhaltungen:
- EP-A- 0 300 924
- EP-A- 0 631 132
- EP-A2- 0 134 622
- WO-A1-87/02132
- DE-A- 2 944 127
- US-A- 4 204 767
- US-A- 4 810 348
- US-A- 5 234 559
- US-A- 5 279 721
- US-A- 5 449 446
- US-A- 5 954 931
- PATENT ABSTRACTS OF JAPAN vol. 015, no. 024 (P-1156), 21. Januar 1991 (1991-01-21) -& JP 02 268272 A (SHIGERO MORI;OTHERS: 02), 1. November 1990 (1990-11-01) -& DATABASE WPI Section Ch, Week 199050 Derwent Publications Ltd., London, GB; Class A89, AN 1990-371755 XP002236700 & JP 02 268272 A (SEIKO DENSHI KOGYO KK), 1. November 1990 (1990-11-01)
- FABRICE DAVID; RAPHAEL LEVY; GERARD LUCOTTE: 'Detection and typing of human papillomavirus DNA from cervical biopsies by the slot-blot hybridization method' MOLECULAR AND CELLULAR PROBES Bd. 4, 1990, Seiten 53 - 61
- SCHLICHTING H.; HUETTIG A.; LICHNEROVA E.: 'Automated electrophoresis by slotgels' MOLECULAR & CELLULAR PROTEOMICS Bd. 4,NR.8,SUPPL.1, August 2005, MUNICH, GERMANY, Seite S376 ISSN: 1535-9476
- CHRISTINA JÄGERSTEIN ET AL: 'Blotting from PhastGel media after horizontal sodium dodecyl sulfate-polyacrylamid gel electrohporesis' ELECTROPHORESIS Bd. 9, 1988, Seiten 662 - 665

## Beschreibung

Die Erfindung betrifft eine Vorrichtung und ein Verfahren zur automatischen Analyse der Bestandteile mindestens eines Analyten, insbesondere mittels Gel-Elektrophorese und/oder isoelektrischer Fokussierung, mit mindestens einer Trennmatrix, insbesondere einem Gel.

Die Gel-Elektrophorese ist ein bereits lange etabliertes semi-quantitatives Verfahren zum Nachweis einzelner DNA-Fragmente oder Proteine aus einem Gemisch derselben in einer wässrigen Lösung. Ein solches Gemisch wird im Folgenden als Analyt bezeichnet und als Bestandteile des Analyten wird lediglich von Proteinen gesprochen, auch wenn darunter immer DNA-Fragmente und/oder Proteine oder ähnliche Stoffe verstanden werden sollen.

Der Analyt wird im Zuge der Gel-Elektrophorese nach Molekulargewicht der beteiligten Proteine aufgetrennt und entweder mit Antikörpern nachgewiesen oder lediglich angefärbt. Dabei spielt neben dem Molekulargewicht auch die Ladung und die Form der Substanzen eine Rolle. Zur Auftrennung wird der Analyt lokal auf eine Trennmatrix aufgebracht, die mit einer wässrigem Pufferlösung angefeuchtet ist. Gebräuchliche Matrices sind Agarose-Gele und Polyacrylamid-Gele unterschiedlicher Konzentration. Der Analyt wird an einem Ende auf die Trennmatrix aufgebracht. Durch Anlegen einer Spannung von z.B. 50-2000V wird er anschließend in der Trennmatrix in Richtung der Spannung bewegt. Der wässrige Puffer dient dabei zur Konstanthaltung des pH-Wertes und der Salzkonzentration. Je nach ihrem Molekulargewicht, Form und Ladung werden die Proteine dabei unterschiedlich stark von der Matrix zurückgehalten und verteilen sich dadurch nach einiger Zeit (z.B. 1-10h) in der Trennmatrix entlang der Strombahn.

Die so aufgetrennten Proteine werden anschließend mittels einer biologischchemischen Reaktion mit Antikörpern identifiziert. Dies geschieht in einer speziell präparierten Membran, welche die aufgetrennten Substanzen aufnimmt. Meist wird Nitrozellulose oder Nylon verwendet. Der Transfer aus der Trennmatrix erfolgt durch das Anlegen einer Spannung, und zwar flächig zwischen der Trennmatrix und der daraufgepressten Membran. Dies wird als Blotten bezeichnet. Zur Beschleunigung kann er durch eine Druckdifferenz unterstützt werden. Nach einer Zeit, die stark von den Blotbedingungen abhängt, sind die geladenen Proteine quantitativ in die Membran gewechselt. Durch Hinzufügen eines spezifischen Antikörpers wird dann in dem Protein-Gemisch ein bestimmtes Protein selektiv gebunden. Der Antikörper wird meist durch radioaktive, fluoreszierende oder chromatische Markierung nachgewiesen und macht so das Protein identifizierbar ('sichtbar').

Falls die Lage der Proteine in der Trennmatrix nach der Auftrennung bereits in Vorversuchen bestimmt wurde, reicht es, die Proteine unspezifisch anzufärben. Dies geschieht durch Eintauchen der gesamten Trennmatrix in eine Färbelösung, die bevorzugt Proteine anfärbt. Die Trennmatrix wird anschließend wieder entfärbt. Es bleiben Banden sichtbar, die die aktuelle Position der Proteine auf der Trennmatrix kennzeichnen. Die Position der Banden ist ein grobes Maß für das Molekulargewicht der Proteine, die Intensität der Banden ist ein grobes Maß für die in der zu messenden Substanz vorhandene Menge der Proteine. Als Detektor im optischen Bereich dient einerseits der Augenschein, andererseits ein geeichtes Densitometer, das die Intensität des Farbstoffs registriert. Der Färbeschritt in Anschluss an die Auftrennung kann entfallen, wenn der Analyt vor der Auftrennung mit einem geeigneten Farbstoff versetzt wurde. Meist werden dazu fluoreszierende Farbstoffe verwendet, die anschließend mit UV-Scannern automatisch nachgewiesen werden.

Für den ersten Schritt - das elektrophoretische Trennen - sind mehrere Anordnungen etabliert:

Bei der vertikalen Slab-Elektrophorese, werden in einem sehr breiten Gel (50-150mm lang, 100-200mm breit, 0.3-2mm dick) nebeneinander typischerweise 10-50 unterschiedliche Analyte aufgebracht. Sie laufen parallel aber in getrennten Bahnen. Das Gel liegt üblicherweise zunächst zwischen 2 Glas- oder KunststoffPlatten, solange die Spannung anliegt. 2 Reservoirs mit Pufferlösung kommunizieren jeweils mit dem oberen und unteren Ende des Gels. Nach dem Separieren der Proteine wird das Gel mit den Glasplatten aus der Apparatur entnommen, die Glasplatten entfernt, und die Färbe-Schritte bzw. die weiteren Transfer-Schritte für das Blotten durchgeführt. Das Gel ist mechanisch extrem instabil: Es kann durch sein Eigengewicht zerreißen, saugt sich an glatten Unterlagen fest und knickt sofort. Ohne Pufferlösung trocknet es aus und verändert dabei seine Form. Dadurch ist das automatische Handling des Gels ohne die stützenden Glasplatten unmöglich. Gegenwärtig sind bis zu 6 verschiedene Geräte üblich, die obige Prozesse unterstützen: Eine Apparatur zum Gießen der Gele, eine Trennkammer, eine Stromversorgung, Färbewannen und ein Densitometer. Wird eine Immunreaktion durchgeführt, benötigt man zusätzlich eine Blot-Apparatur, sowie weitere Färbe- und Umpufferwannen.

Durch Färben der Proteine vor der Elektrophorese kann man erreichen, dass der Auswertevorgang ohne Entfernen der Glasplatten erfolgen kann. Dadurch ist eine teilweise Automatisierung möglich, bei Einschränkungen in der Färbetechnik. Der Blot-Prozess wird dadurch nicht automatisierbar.

Bei der Submarine-Elektrophorese liegt das Gel auf einer horizontalen Platte die in einer Wanne liegt. Die Wanne ist bis knapp über die Oberkante des Gels mit Puffer gefüllt. Die beiden Elektroden sind jeweils am Ende des Gels im Puffer angeordnet. Zum Färben, Auswerten und Blotten wird das Gel aus der Wanne entnommen. Automatisierung ist auch hier nicht einfach möglich.

Bei der horizontalen Slab-Elelctrophorese liegt das Gel auf einer horizontalen Glasplatte und ist oben frei. Der Puffer wird in begrenztem Umfang von entsprechend verdickten Gelblöcken an beiden Enden des Gels bereitgestellt. Hier ist zwar schon teilweise Automatisierung möglich. Das oben offene Gel ermöglicht das Färben nach der Auftrennung. Auch ein UV-Scanner kann direkt auf das Gel zugreifen. Blotten ohne Entfernen des Gels ist jedoch auch bei diesen Geräten nicht möglich, da zum Blotten das Gel von beiden Flächen elektrisch kontaktiert und zusätzlich von der nicht aufliegenden Fläche mit einer Membran in Kontakt stehen muss. Eine Elektrode auf der Unterseite des Gels würde den 1. Elektrophoreseschritt jedoch unmöglich machen, da die angelegte Spannung kurzgeschlossen würde. Blot-Verfahren, die alleine auf Diffusion beruhen, dauern zu lange.

Bei allen Verfahren, die ein flächiges Gel versenden und mehrere Analyten gleichzeitig laufen lassen, treten neben den Handling-Problemen folgende weitere Probleme auf: - Wärmeentwicklung aufgrund der zugeführten elektrischen Energie, die zu unterschiedlichen Laufzeiten am Rand und in der Mitte der Gel-Platte führt. Kühlung über Luft oder die Trägerplatte sollen hier Abhilfe schaffen. Werden große Glasplatten verwendet, so weisen die Gele oft in der Mitte und am Rand unterschiedliche Dicke auf, was die Laufgeschwindigkeit beeinflusst. Dem versucht man durch mechanische Stützen abzuhelfen. Eng liegende Bahnen können sich gegenseitig beeinflussen. Durch ausreichende Abstände oder Separation der Bahnen durch Rillen in der darunterliegenden Glasplatte versucht man dem zu begegnen. Beim Laden werden spezielle Pipetten und Ladetaschen verwendet, um Fehler durch zu geringe Abstände zu vermeiden. Bei horizontalen Gelen tritt aufgrund des begrenzten Vorrats an Puffer eine Verschiebung der chemischen Umgebung während der Elektrophorese auf, welche die Laufgeschwindigkeit zusätzlich beeinflusst.

Die Rod-Elektrophorese ist eine Variante, bei der das Gel in eine Glasröhre eingeschlossen ist. Hier wird vor der Elektrophorese gefärbt. Dadurch ist Automatisierung zwar leicht möglich, aber nur solange auf Blotten verzichtet wird. Zum Blotten kann das Gel bei ausreichendem Durchmesser der Röhre mit einem Stößel entnommen werden. Die Entnahme ist jedoch aufgrund der genannten schlechten mechanischen Eigenschaften des Gels ein sehr riskanter Prozess der, auch wenn er gelingt, schlecht reproduzierbare Ergebnisse liefert. Gesamtautomatisierung ist daher auch nicht möglich.

Bei der Kapillar-Elektrophorese wird eine sehr dünne und lange Kapillare (z.B. 0.1mm x 50cm) verwendet. Die Dimensionen erlauben eine sehr gute Auflösung des Molekulargewichts, die mit sinkendem Querschnitt und steigender Länge besser wird. Die Kapillare wird automatisch mit Gel befüllt und das nach dem Prozess mit Wasser unter hohem Druck entfernt wird. Bei geeigneter Kapillargeometrie kann auch auf das Gel verzichtet werden. Der Farbstoff wird beim Laden des Analyten appliziert. Die Substanzen werden mit einem UV-Scanner beim Durchlaufen einer bestimmten Position in der Kapillare detektiert. Diese Variante ist dadurch sehr gut automatisierbar was die Detektion der unterschiedlichen Molekulargewichte betrifft. Durch eine hohe Zahl von Kapillaren lässt sich gleichzeitig zwar ein hoher Durchsatz erzielen. Blotten ist bei der Kapillar-Elektrophorese jedoch unmöglich, da der Zugang zum Gel von der Seite verhindert ist.

Bei der Kapillar-Elektrophorese sind die sehr hohe Spannung (bis zu 30.000V) und die Wärmeentwicklung und die Stabilität der Kapillare problematisch. Die oberflächenspezifische Wärmeentwicklung steigt mit dem Durchmesser und noch stärker mit der Länge der Kapillare. Dem wird durch Kühlung mit Luft und Wasser begegnet.

Um der Problematik Rechnung zu tragen, dass Proteine unterschiedlicher Zusammensetzung aber gleichen Molekulargewichts ähnliche Laufgeschwindigkeit im Gel aufweisen, wurden Abwandlungen der Elektrophorese entwickelt, die jedoch, wie nachstehend ausgeführt, aufgrund ihrer komplizierten Handhabung ebenfalls nicht automatisiert sind:

Das Gradienten-Gel. Die Acrylamid-Konzentration in den Polyacrylamid-Gelen beeinflusst die Laufgeschwindigkeit der Proteine wesentlich. Normalerweise wird daher die Konzentration möglichst genau eingehalten. Man kann jedoch bewusst die Konzentration entlang der Laufrichtung eines Slab-Gels verändern, um zu erreichen, dass hohe und niedrige Molekulargewichte der Proteine auf dem gleichen Gel gut getrennt dargestellt werden.

Das Ferguson-Gel. Neben dem Molekulargewicht beeinflusst die unterschiedliche Form der Proteine deren Laufgeschwindigkeit. Dies kann man ausnutzen, indem man Gel-Matrices mit unterschiedlicher Porengröße verwendet. Variiert man die Konzentration des Gels quer zur Laufrichtung und appliziert den gleichen Analyten in allen Bahnen, so entsteht ein Ferguson Plot. In dem 2-dimensionalen Bild sind die Proteine durch Kurven unterschiedlicher Steigung repräsentiert. Da von den Proteinen zwei verschiedene Eigenschaften detektiert werden, ist diese Methode erheblich aussagefähiger als die Standard-Elektrophorese.

Die isoelektrische Fokussierung. Dabei wird als weitere Eigenschaft der isoelektrische Punkt der Proteine abgefragt. In einem Gel wird ein pH-Gradient entlang des Gelkanals erzeugt. Der Analyt wird an einem beliebigen Punkt aufgebracht, bevorzugt in der Mitte des Gelkanals, und Spannung angelegt. Da nur an der Position mit dem passenden pH-Wert die Ladung der Proteine verschwindet, driften die Proteine bis sie diesen Punkt erreicht haben und dort verbleiben. Nach ausreichender Zeit stellt sich in dem Gel eine Annordnung der Proteine ein die ihrem isoelekrischen Punkt entspricht, der damit bestimmt wird.

Die 2D-Elektrophorese. Das ist die Kombination der isoelektrischen Fokussierung mit einer Standard-Elektrophorese. In einem ersten Gel, meist ein Rod, werden die Proteine gemäß ihrem isoelektrischen Punkt aufgetrennt. Die so aufgetrennten Proteine werden in ein zweites Gel - ein Slab-Gel - transferiert und dort elektrophoretisch weiter aufgetrennt. Man erhält so einen 2-dimensionalen Fingerabdruck des Analyten. In einer Dimension ist der isoelektrische Punkt und in der anderen Richtung das Molekulargewicht aufgetragen.

Gegenwärtig etablieren sich Methoden, die ein 'Labor auf dem Chip' nachbilden.

Diese Verfahren beinhalten Techniken zum Transfer der Substanzen innerhalb des Chips, zur Reaktion mit zugefügten Reagenzien und zur Detektion, die auch Massenspektroskopie im Vakuum einschließt.

Diese Verfahren haben als Prämisse die Automatisierbarkeit in kleinen Dimensionen, und versuchen alle bekannten biochemischen Verfahren auf dieser Micro-Skala durchzuführen. In einem Träger, meist eine transparente Glasscheibe von z.B. 40 x 10 mm und 1 mm Dicke, ist mindestens ein Kanal von z.B. 5-50 µm eingelassen. Dieser Kanal wird von oben mit einem Deckglas das auf dem unteren Chip liegt nachhaltig verschlossen, wodurch ein geschlossener Kanal mit sehr geringen Abmessungen entsteht. Die Elektrophorese findet in diesem Kanal statt, der zunächst mit einer Trägermatrix gefüllt wird, meist ein speziell dünnflüssiges Gel. Die Kontaktierung erfolgt von oben durch feine Öffnungen in der Deckplatte, durch die auch der Analyt aufgebracht wird. Die Auswertung erfolgt wie bei der Kapillar-Elektrophorese indem die aufgetrennten Proteine an einem Detektor vorbeilaufcn. Es handelt sich dabei meist um einen optischen Detektor, der von oben durch die Flächen der transparenten Glasplatten zugreift. Die entsprechenden Färbesubstanzen werden vor Beginn der Aufspaltung zugesetzt. Durch Seitenkanäle, die in den Hauptkanal münden, ist es möglich, nacheinander mehrere Analyte in den gleichen Kanal zu schleusen und in der Trennmatrix zu untersuchen. Prinzipiell können auch Immunreaktionen durchgeführt werden indem aus einem der Seitenkanäle entsprechende Reagenzien eingeschleust werden. Der Transport findet dabei durch geeignet angelegte Spannungen statt. Dabei muss jedoch der Zeitpunkt bekannt sein zu dem das Reagenz sinnvoll zugeführt wird, da nur immer eine Reaktion mit dem vor der Kanalmündung befindlichen Teil des Hauptkanals erfolgt.

Zur Durchführung einer unfassenden Immunreaktion, wie sie bei den bisher beschriebenen Verfahren durchgeführt wird, wäre es notwendig, Immunreagenzien mit jedem Teilvolumen das den Trennkanal verlässt in Kontakt zu bringen und die Reaktion auszuwerten. Eine solche Immunreaktion kann z.B. 5 oder 10 biochemische Teilschritte umfassen, die jeweils Zeit beanspruchen. Konstruktionsbedingt laufen diese Reaktionen sequenziell ab, entsprechend zeitaufwendig ist daher trotz der durch die geringe Größe erhöhten Reaktionsgeschwindigkeit das Screening aller aufgetrennten Bestandteile. Solange keine Kenntnis über das Molekulargewicht und damit die Laufzeit eines gesuchten Proteins besteht, kann daher nur durch viele Versuche die gesuchte 'reaktive Position' ermittelt werden oder indem konventionelle Elektrophorese mit Blotten und Immundetektion vorgeschaltet wird.

DE 29 44 127 betrifft ein Verfahren und eine Vorrichtung für die Elektrophorese wobei eine Trägerplatte 2 Rippen 3 hat, die aus einer Fläche der Trägerplatte 2 herausragen und auf der Rückseite lang gestreckte kanalförmige vertikale Mulden 3' bilden. Die Mulden 3' sind nach vorne von dem die Rippen 3 bildenden Material der Trägerplatte abgeschlossen und können durch Anlegen der Trägerplatte 2 an die Außenfläche der Frontplatte 1 auch zur Rückseite hin zur Bildung geschlossener, röhrenförmiger Kanäle abgedeckt werden. Im unteren Bereich sind die Mulden 3' über eine horizontale Mulde 4 miteinander verbunden, die, wenn die Trägerplatte 2 an die Frontplatte 1 angepresst ist, eine horizontale geschlossene Röhre bildet, die sich an die Mulden 3' gebildeten vertikalen Röhren anschließt.

David et al., Molecular and Cellular Probes, Academic Press Ltd, 1990 (4), Seite 53-61 zeigt einen Stot-blotter.

WO8702132 offenbart eine Vorrichtung zur Elektrophorese und zum anschliessendem Blotten mit einem innerhalb einer Öffnung porösen Stützelement. Das Stützelement wird zwischen zwei Analyseplatten gepresst, die beide Fenster aufweisen, die mit der Öffnung fluchten. Das Zusammenpressen sorgt auch für eine Abdichtung rund um die Öffnung gegenüber beiden Analyseplatten. Über das obere Fenster wird auf dem Stützelement eine Trennmatrix präpariert. Das Stützelement liegt somit in vertikaler Richtung nur von unten an der Trennmatrix an. Anschliessend wird mittels angebrachter Elektroden eine Elektrophorese in horizontaler Trennrichtung durchgeführt. Dann wird der Elektrophoresepuffer im oberen Fenster durch Transferpuffer zum Blotten ersetzt und am unteren Fenster ein Vakuum angelegt, um die Probe auf eine Filtermembran zu blotten. Die Transferrichtung ist damit ebenfalls vertikal.

Damit sind die gegenwärtigen Chip-Konstruktionen trotz ihres hohen Automatisierungsgrades kein vollwertiger Ersatz für die konventionellen Blot-Techniken, die den Transfer und damit die immunologische Detektion aller aufgetrennten Substanzen gleichzeitig in einem Arbeitsschritt ermöglichen.

Demgemäß ist es die Aufgabe der Erfindung, eine Vorrichtung und ein Verfahren zur automatischen Analyse der Bestandteile mindestens eines Analyten zur Verfügung zu stellen, die, unter Vermeidung der oben genannten Nachteile, eine automatische Gel-Elektrophorese einschließlich eines Transfers des aufgetrennten

Analyten auf eine Membran oder ein weiteres Gel ermöglichen.

Diese Aufgabe wird durch eine Vorrichtung bzw. ein Verfahren gemäß den unabhängigen Ansprüchen gelöst. Weitere Ausführungsformen sind in den Unteransprüchen definiert.

Erfindungsgemäß bereitgestellt wird eine Vorrichtung zur automatischen Analyse der Bestandteile mindestens eines Analyten, insbesondere mittels Gel-Elektrophorese und/oder isoelektrischer Fokussierung, mit mindestens einer Trennmatrix, insbesondere einem Gel, wobei jede Trennmatrix 602 in einer Stützrichtung S auf beiden Seiten von einem Stützelement 601 getragen wird, mit einem Analyten beladbar 626 ist und in einer Trennrichtung T zur Auftrennung des Analyten in seine Bestandteile an entgegengesetzten Enden elektrisch kontaktierbar 627, 628 ist, wobei das Stützelement 315,215,103,1,601 derart ausgebildet ist, dass es von einer Seite, und zwar in einer Zugangsrichtung Z, die von der Stützrichtung S und der Trennrichtung T verschieden ist, im wesentlichen über den gesamten Bereich der Trennmatrix 314,214,101,2,602, in welchem sich die Bestandteile des Analyten nach Auftrennen befinden, einen Stoffaustauschvorgang ermöglicht und das Stützelement 315,215,102,1,601 eine durchgehende Dichtfläche aufweist, die diesen Stoffaustauschvorgang außerhalb dieses Bereichs im wesentlichen verhindert.

Vorteilhafterweise wird dadurch erreicht, dass die labile Trennmatrix im Anschluss an den Trennvorgang zusammen mit den aufgetrennten Bestandteilen des Analyten in dem robusten Stützelement verbleiben kann, um einer Vielzahl von Prozessschritten untenworfen zu werden. Mittels des einseitigen Zugangs in Zugangsrichtung ist es möglich, mit jeder der Trennmatrices getrennt Stoffaustauschvorgänge durchzuführen, z.B. zu Färben, zu Entfärben, den Puffer zu wechseln, die aufgetrennten Bestandteile des Analyten durch Diffusion auf eine Membran zu transferieren. Das Bandenmuster kann in Reflexion ausgelesen werden.

Auch das Gießen und das Beladen der Trennmatrices ist möglich. Die durchgehende Abdichtung der Zugänge ermöglicht dabei automatische Arbeitsabläufe.

In Weiterbildung der Erfindung kann das Stützelement 315,215,102,1,601 derart ausgebildet sein, dass es von beiden Seiten in der Zugangsrichtung Z im wesentlichen über den gesamten Bereich der Trennmatrix 314,214,101,2,602, in welchem sich die Bestandteile des Analyten nach Auftrennen befinden, jeweils einen Stoffaustauschvorgang ermöglicht, und das Stützelement auf beiden Seiten in der Zugangsrichtung (Z) kann jeweils eine durchgehende Dichtfläche aufweisen, die den jeweiligen Stoffaustauschvorgang außerhalb dieses Bereichs im wesentlichen verhindert. Durch den zusätzlichen Zugang von der 2. Seite wird die Effizient der Stoffaustauschvorgänge erheblich verbessert, der Blot-Vorgang auf eine Membran kann durch Strom und Druckunterschiede wesentlich beschleunigt werden, der Transfer auf eine weitere Trennmatrix wird ermöglicht und das Bandenmuster kann in Transmission ausgelesen werden. Damit sind alle im Laufe der Gel-Elektrophorese und der isoelektrischen Fokussierung an der Trennmatrix anfallenden Prozessschritte unter Verbleib derselben in der schützenden und dichtenden Stützstruktur möglich und somit automatisierbar.

Die Erfindung umfasst auch das entsprechende Verfahren zur Automatisierung der Analyse der Bestandteile mindestens eines Analyten.

Allen Ausführungsformen der Erfindung ist gemeinsam, dass jeder zu untersuchende Analyt in einem Einzelelement analysiert wird. Durch Aneinanderreihen vieler solcher Elemente ist es möglich, beliebig viele Probensubstanzen gleichzeitig zu untersuchen. Auf elektronischem Weg kann anschließend auf Wunsch wieder das gewohnte Bild der Parallel-Untersuchung wie in einem Slab-Gel erzeugt werden, mit dem auch in chemischer und biochemischer Hinsicht volle Übereinstimmung besteht.

Ein weiterer Gedanke der Erfindung besteht darin, dass die Trennmatrix in Z-Richtung sehr schmal ist und auf der gesamten Länge seitlich frei liegt, zum Färben, Entfärben, Blotten und zum Transfer des aufgetrennten Analyten in eine weitere Trennmatrix. Durch die geringe Breite des Zugangs in Z-Richtung wird sichergestellt, dass das Stützelement, das aus S-Richtung anliegt die eigentlich mechanisch instabile Trennmatrix stabilisiert.

Ein weiterer Gedanke der Erfindung besteht darin, dass entweder in S-Richtung und/oder in Z-Richtung die optische Auswertung der gefärbten Bestandteile des Analyten erfolgen kann. So kann entweder die optische Wegstrecke im Gel groß gemacht werden um die Empfindlichkeit zu steigern und die Stützelemente können verbilligt werden da die optischen Elemente entfallen oder zuvor gefärbte Proteine können während des Auftrennens beobachtet werden.

Ein weiterer Gedanke besteht darin, dass die Richtungen T, S und Z jeweils bevorzugt senkrecht zueinander stehen, wodurch es möglich ist den Analyten innerhalb der Trennmatrix in T-Richtung aufzutrennen, in Z-Richtung Zugang für biochemische, chemische oder physikalische Reaktionen oder zum Transfer des aufgetrennten Analyten auf der vollen Länge zu ermöglichen und in S-Richtung durch geeignete Stützelemente die Stabilität der Trennmatrix und, falls die Stützelemente transparent sind, gleichzeitig optischen Zugang zu gewährleisten. Somit wird das Entfernen des mechanisch instabilen Gels aus den Stützelementen unnötig, und es besteht die Möglichkeit, alle Arbeitsgänge inklusive des Blot-Vorgangs über die gesamte Gel-Länge vollständig zu Automatisieren.

Die Erfindung beschreibt im folgenden eine neue Variante der Gel-Elektrophorese, welche die Vorteile der bekannten Methoden vereint, ohne neue Nachteile zu beinhalten. Es wird mittels der erfindungsgemäßen Vorrichtung möglich, den gesamten Vorgang - das Gießen des Gels, das Aufbringen der Probensubstanz, die elektrische Trennung der Proteine, das Färben und Entfärben, das optische Auswerten sowie alternativ das Blotten aller aufgetrennten Substanzen - in einem Gerät zusammenzufassen. Außer dem Laden des Analyten - prinzipiell kann dies auch automatisch erfolgen - sind keine manuellen Eingriffe notwendig, bis das Ergebnis üblicher Weise elektronisch gelesen vorliegt. Wird das Gerät für einen Blot-Vorgang verwendet, kommt noch das Einlegen und Entnehmen der Membran hinzu, was ebenfalls automatisierbar ist. Durch geringe Dimensionen der Gelbahnen sowie aktive Temperaturstabilisierung bei einigen oder allen Prozessschritten sind sehr schnelle, präzise Ergebnisse möglich. Das Verfahren ist beliebig parallelisierbar, wodurch sehr hoher Durchsatz möglich wird. An der chemischen Prozedur der etablierten Slab-Elektrophorese - den Gelen, den Farbstoffen, den Markern, den Puffern - muss nichts verändert werden. Die Blot-Prozedur läuft ebenfalls unter den üblichen chemischen Bedingungen auf die gleichen Membran-Materialien ab. Neue Messwerte sind daher mit konventionell ermittelten Messwerten kompatibel und der vorhandene Datenbestand bleibt bei der Verwendung des neuen Gerätes kompatibel. Die Erfindung ersetzt somit mehrere der bisher verwendeten Geräte, verkürzt die Zeit bis zum Vorliegen eines Ergebnisses und erhöht damit den Durchsatz erheblich. Durch das Wegfallen menschlicher Eingriffe ist die Gesamt-Prozedur einfach validierbar, durch individuelle Handhabung verschiedener Bedienpersonen praktisch nicht beeinflussbar, zuverlässig und für den Dauereinsatz geeignet.

Bei der Untersuchung von DNA-Fragmenten erfolgt der Färbeschritt ebenfalls automatisch. Dies hat besondere Bedeutung, da dabei in der Regel Ethidiumbromid als Farbstoff verwendet wird. Diese Substanz ist stark mutagen, Kontakt mit der Haut muss daher unbedingt vermieden werden. Die Automatisierung ist daher besonders wichtig.

Die Richtung, in der die Proteine separiert werden, ist von der Ausführungsform abhängig und erfolgt z.B. von oben nach unten (T-Richtung), die Proteine werden dann anschließend von links und rechts (Z-Richtung) gefärbt, wieder entfärbt und schließlich von vorne nach hinten (S-Richtung) optisch ausgewertet. Falls geblottet wird, erfolgt dies von links nach rechts (Z-Richtung). Jede andere Ausgangslage ist natürlich auch möglich, wesentlich ist die Definition der Richtungen T, Z, S.

Erfindungsgemäß kann daher die optische Auswertung und auch später das Blotten in der gleichen Anordnung erfolgen. Eine Ausführungsform erlaubt nach dem Blotten zusätzlich die Immundetektion in der Blot-Membran. In der Trennmatrix werden damit alle 3 Dimensionen verwendet, und es ist möglich die Stützelemente während der gesamten Prozedur mit der Trennmatrix verbunden zu lassen. Der Blot-Prozess ist daher voll automatisierbar, da der kritische Schritt des Abziehens der Trennmatrix von den Stützelementen entfällt.

Die elektophoretischen Ströme, Spannungen und Zeiten, die bei der optischen Untersuchung des Analyten Verwendung finden, können unverändert für die immunologische Untersuchung des Analyten übernommen werden, wodurch eine eindeutige Zuordnung der Ergebnisse möglich ist.

Als Detektor kommt jedes beliebige Sensorelement in Frage, das auf Eigenschaften anspricht, die die Lage der verschiedenen Proteine charakterisieren:

Beispielsweise ein CCD-Array oder eine CCD-Kamera, wenn die Lichtquelle die gesamte Länge des Gelkanal gleichzeitig beleuchtet, eine einzelne Fotodiode mit geeignetem Kollektor wenn die Lichtquelle den Gelkanal scannt, ein auf Radioaktivität sensitiver Film oder Halbleiterarray, wenn statt dem Färbeprozess das Gel radioaktiv markiert wurde, ein Detektor für Fluoreszenzstrahlung falls das Färben mit einem fluoreszenzaktiven Farbstoff erfolgt ist, ein pH-sensitiver Sensor, der mechanisch den Kanal abtastet.

Als Lichtquelle im erweiterten Sinn kommen alle Quellen in Betracht, deren Emission von den Proteinen in Reflexion oder Transmission mit oder ohne eine vorangehende Vorbehandlung beeinflusst wird. Dies sind u.a. eine Glühlampe mit und ohne Fokussierung, ein Array von Leuchtdioden mit und ohne Fokussierung, ein Laser aufgeweitet oder nicht, eine UV-Lichtquelle mit und ohne Fokussierung, eine Infrarotlichtquelle mit und ohne Fokussierung, eine radioaktive Quelle.

Um eine gute Ankoppelung von Sensor und Detektor an die begrenzenden Glasplatten zu ermöglichen, kann es sinnvoll sein, dieses Volumen mit einer geeigneten Flüssigkeit zu fluten. So kann eine Flüssigkeit die einen ähnlichen Brechungsindex aufweist wie die Glasplatte oder das Gel Reflexionen verhindern und Beschädigungen der Oberfläche ausgleichen.

In einer Ausführungsform ist der Matrix-Kanal in T-Richtung erheblich länger als in S-Richtung breit und in Z-Richtung tief und weist einen rechteckigen Querschnitt auf. Er ist in Z-Richtung offen und zugänglich und in S-Richtung durch dünne Glasplatten abgedeckt. In Z-Richtung ist die Dicke der Trennmatrix ausreichend niedrig, um die effektive Diffusion von Farbstoffen zu ermöglichen. In S-Richtung ist die Dicke der Trennmatrix ausreichend niedrig, um die Erwärmung und Kühlung der Trennmatrix und deren Thermostatisierung durch die dünnen Glasplatten zu ermöglichen. Die Thermostatisierung der Trennmatrix ermöglicht die Beschleunigung der Diffusion der Färbe- / Entfärbeflüssigkeiten sowie die Kontrolle von thermisch instabilen Substanzen. Der Gel-Kanal ist zusammen mit den Glas-Platten in einer stützenden Struktur befestigt. Eine solche Anordnung wird im folgenden als 'Stick' bezeichnet.

Ein Stick kann sehr kostengünstig z.B. als Kunststoffspritzteil hergestellt werden. Der Stick kann in Anschluss an den Messvorgang weggeworfen werden, das Gel muss daraus nie entfernt werden. Das Gel kann daher mechanisch fast beliebig instabil sein.

Als Alternative zu Glasplatten kommen hier alle Arten von Folien und Platten, die für die verwendete Strahlung transparent sind, in Betracht, insbesondere die gleichen Materialien die noch für die Analyseplatten einer im folgenden beschriebenen Ausführungsform aufgezählt werden. Bei ausreichender Stabilität des Gels kann auch auf eine der Abdeckungen ganz verzichtet werden.

Je nach Stabilität des verwendeten Gels kann es nützlich sein den Zugang zum Gel in Z-Richtung direkt am Gel geringfügig zu vermindern, um zu vermeiden, dass das Gel seitlich verschiebbar ist. Auch Beschichtungen zur Erhöhung der Haftung des Gel-Kanals an den Glasplatten sind möglich.

Das Hauptgerät zum Handhaben dieser Sticks ist mit einer eigenen Auswertesensorik und entsprechenden Färbe- und Entfärbeeinrichtungen für jeden Stick versehen. Der Stick kann dadurch während des gesamten Prozesses am gleichen Ort in der Apparatur bleiben, wodurch das Hauptgerät sehr einfach wird. Durch Aneinanderreihen einer beliebigen Zahl der Sticks und der ebenfalls relativ billigen Sensorik, können beliebig viele Substanzen gleichzeitig vermessen werden, äquivalent zu den typisch 10-20 Bahnen der Slab-Elektrophorese. Die individuelle Sensorik ist jedoch nicht zwingend erforderlich, auch eine gemeinsame Auswerteeinrichtung, zu der die einzelnen Sticks transportiert werden, kann sinnvoll sein, oder ein Sensor, der der Reihe nach die Sticks abtastet.

In einer weiteren Ausführungsform steht in einem Hauptgerät eine Reihe fest montierter Gelkanäle die automatisch mit Gel gefüllt werden können, indem die zunächst seitlich offenen Kanäle beidseitig gedichtet und anschließend wieder freigegeben werden. Durch Anpressen einer Membran ist neben den Trenn- und Färbeschritten auch Blotten möglich.

Ein weiterer Gedanke der Erfindung besteht darin, in S-Richtung die Stützelemente so auszuführen, dass es möglich wird, viele unterschiedliche Arbeitsschritte mittels verschiedener Teile einer Hauptapparatur an einer Trennmatrix durchzuführen, indem lediglich die Stützelemente seitlich verschoben werden, bevorzugt in S-Richtung. Der Gel-Kanal ist also nicht mehr ortsfest zwischen verschiedenen Prozessschritten sondern wird zum Durchführen jeder neuen Prozedur durch einen sehr einfachen Mechanismus an eine neue Position transportiert:

In einer Ausführungsform wird zu diesem Zweck durch eine Glasplatte ein Durchbruch mit den Abmessungen des Gels geschnitten. Diese Glasplatte wird oben und unten flächig zwischen zwei weiteren Glasplatten eingeschlossen, die das Dichten übernehmen. Die beiden äußeren Glasplatten sind ortsfest, während die mittlere Glasplatte quer zur Richtung des Durchbruchs, also des Gelkanals bewegt werden kann. Die mittlere Glasplatte mit dem Gelkanal wird im folgenden als Probenplatte bezeichnet, die beiden äußeren Platten werden als Analyseplatten bezeichnet.

Die Probenplatte kann durch einen Verschiebemechanismus in mehrere diskrete Positionen relativ zu den ortsfesten Analyseplatten gebracht werden, die Stationen genannt werden. In jeder der Stationen kann mit der Probenplatte eine spezielle Prozedur durchgeführt werden. Typische Beispiele für Prozeduren sind: Gießen des Gels - Aufbringen der Probensubstanz und Elektrophorese - Färben, Entfärben des Gels und Detektion der Banden - Blotten - Immundetektion - 2D-Elektrophorese - Transfer auf eine weitere Trennmatrix - Reinigen des Gelkanals. Zu diesem Zweck sind an den Analyseplatten bei jeder Station entsprechende Vorrichtungen vorgesehen.

Bei den einzelnen Prozessschritten kann die Probenplatte während des Verschiebens drucklos zwischen den Analyseplatten bewegt werden. In Arbeitsposition werden die Analyseplatten gegen die Probenplatte gerückt, wodurch der Gel-Kanal oben und unten vollständig gedichtet wird, wenn nicht eine entsprechende Station in den Analyseplatten Zugriff nimmt. Das Bearbeiten des Gels erfolgt in den Stationen überwiegend in Z-Richtung quer zur Verschieberichtung. Vorzugsweise ist die obere Analyseplatte klappbar angebracht, um eine sehr einfache Wartung der Probenplatte zu ermöglichen.

In einer Ausführungsform erfolgt das Gießen in Station (V-A) durch 2 Öffnungen in der unteren Analyseplatte. Die Probensubstanz wird in der Station (V-B) durch einen kleinen Trichter aufgebracht, der auf die obere Analyseplatte aufgesetzt ist.

Zusammen mit einem zweiten Trichter wird in dieser Position auch Puffer mit beiden Gel-Enden in Kontakt gebracht und der Elektrolysevorgang durchgeführt.

In Station (V-C) erfolgt das Färben durch kleine Kammern, die durch Schlitze in den beiden Analyseplatten aus Z-Richtung mit dem Gel kommunizieren. In dieser Station wird auch das Banden-Muster aus S-Richtung ausgelesen. Dazu sind in der Probenplatte auf beiden Seiten neben dem Gelkanal je ein Spiegel angeordnet, der einen Strahlengang in Richtungen senkrecht zu der Probenplatte erlaubt. Der Strahlengang beginnt an einer Lichtquelle beispielsweise unter der Analyseplatte, läuft durch das Gel und wird in einen Detektor abgelenkt, beispielsweise unter der Analyseplatte. In Station (V-D) ist es möglich die Proteine in Z-Richtung aus dem Gel durch Strom auf die Membran zu Blotten. Dazu befindet sich unter der unteren Analyseplatte eine Kammer mit Puffer und Elektrode und über der oberen Analyseplatte eine weitere Kammer mit einer entnehmbaren Membran die auf das Gel gerückt wird. Sie ist ebenfalls mit Puffer versetzt und elektrisch kontaktiert. In Station (V-E) wird die fertig geblottete Membran, die zuvor auf der Probenplatte abgelegt wurde mit Immunreagenzien in Kontakt gebracht und in Station (V-F) wird diese Membran ausgewertet. In einer weiteren Station (V-X) die nicht gezeichnet ist wird der Gel-Kanal mit einem zweiten Gel in Kontakt gebracht, das auf der oberen Analyseplatte senkrecht steht. Dieses 2. flächige Gel ermöglicht Elektrophorese in einer Richtung senkrecht zu der ursprünglichen Richtung. Dazu ist unter der Analyseplatte eine Kammer angeordnet die Puffer und eine Elektrode enthält. Das flächige Gel ist an seinem entgegengesetzten Rand ebenfalls mit einer Pufferkammer und einer Elektrode ausgerüstet. In Position (V-R) ist das Ausspülen des Gels aus dem Kanal und dessen Reinigung vorgesehen. In der Probenplatte sind dazu unabhängig von dem Gelkanal zwei weitere kurze Kanäle senkrecht dazu vorgesehen. Das Gel das in den Zu- und Abflüssen nach dem Gießen polymerisiert ist kann so über geeignete Öffnungen der Analyseplatte ausgespült werden.

Eine weitere Platte für die Zuführungskapillaren zu den Trichtern, eine Mechanik zum Andrücken der oberen Analyseplatte, zum Andrücken des LadetaschenStempels, zum Andrücken des Blot-Stempels, zum Andrücken des 2. Gels bei der 2D-Elektrophorese, sowie für die Elektrodenzuführungen können über der oberen Analyseplatte angebracht werden.

In einer weiteren Ausführungsform erfolgt neben dem Zugriff, wie er in Station (V-C) und (V-E) gleichzeitig auf die gesamte Länge des Gel-Kanals und/oder der Membran erfolgt, Zugriff auf ausgewählte Teil-Bereiche, um Reagenzien zu sparen (nicht gezeigt). Dazu sind Schlitze in den Analyseplatten notwendig, die nur einen Teil der vollen Kanal-Länge umfassen. Im Extremfall kann das eine punktförmige Öffnung sein.

In einer weiteren Ausführungsform erfolgt das Auslesen des Bandenmusters aus Z-Richtung, indem dazu eine weitere Station vorgesehen wird. Die optischen Spiegel entfallen. Im Falle von Transmissionsmessungen durch die aufgetrennten und gefärbten Proteine im Gel wird daher die optische Absorption gegenüber der Detektion aus S-Richtung vergrößert, da der optische Weg im Gel verlängert wird. Bei diffuser Abstrahlung aus dem Bandenmuster wird der für den Detektor wirksame Raumwinkel erhöht, da der Abstand zur Linse verkleinert werden kann.

Dadurch können kleinere Protein-Mengen nachgewiesen werden. Diese Vorteile bleiben auch bei der Anwendung nichtoptischer Detektionsmethoden bestehen.

Weiter kann der Abstand zwischen den Gelkanälen reduziert und deren Zahl erhöht werden. Der optische Pfad kann durch Linsen geeignet aufgeweitet werden, um eine bessere Ausnutzung eines CCD-Arrays zu gewährleisten. Für die Herstellung dieser Probenplatte sind keine hochwertigen optischen Komponenten und Flächen erforderlich. Die Probenplatte kann so extrem kostengünstig hergestellt werden, beispielsweise als geschlitztes Kunststoffspritzteil.

In einer weiteren Ausführungsform erfolg das Auslesen des Bandenmusters aus einer Richtung die zwischen der S-Richtung und der Z-Richtung liegt, z.B. unter 30 Grad von der S-Richtung aus gesehen. Die optischen Spiegel entfallen. Der Brechungsindex der Probenplatte ist geeignet gewählt, um den Kanal unter einem möglichst günstigen Winkel zu treffen.

In einer weiteren Ausführungsform erfolgt der Transport der Membran mittels einer zusätzlichen Membranplatte statt durch die Probenplatte. Die Probenplatte enthält dann eine Vielzahl von Kanälen, bevorzugt jeweils eine für jede Trennmatrix und die Membranplatte eine Vielzahl von Vertiefungen, bevorzugt jeweils eine, zum Ablegen und Transport der entsprechenden Membranen nach dem Blotten.

In einer weiteren Ausführungsform sind die den Kanälen zugeordneten Membranen nicht getrennt, sondern bilden eine große zusammenhängende Membran. Das Blotten erfolgt in diesem Fall gleichzeitig aus allen Kanälen auf getrennte Spuren dieser Membran. Die Membranplatte zum Transport der Membran enthält eine Vertiefung zur Aufnahme der gesamten Membran.

In einer weiteren Ausführungsform befindet sich die zusammenhängende Membran auf einem beweglichen Stempel unter der Blotstation (VI-D). In dieser Station, in der zunächst von der Probenplatte geblottet wurde, können nach dem Verschieben der Probenplatte alle Schritte die Flüssigkeitszufuhr zu der Membran erfordern durchgeführt werden (auch mehrfach), insbesondere Umpuffern, mit Immunreagenzien Beladen, Spülen, Waschen, Reinigen, Reaktion durchführen. Die Detektion der erfolgten Reaktion wird mittels einer Detektorplatte durchgeführt die seitlich über die Membran geschoben wird, vorzugsweise von der entgegengesetzten Seite wie die Probenplatte.

In einer weiteren Ausführungsform wird durch seitlich schräge Anordnung der Detektor-Komponenten oder der Flüssigkeitszuführungen in dieser Station (VI-D) zusätzlich das Auslesen der Membran möglich.

In einer weiteren Ausführungsform ist in der Probenplatte mindestens ein Durchbruch quer zur Richtung der Trennkanäle untergebracht. In dem Querkanal kann zunächst mittels z.B. isoelektrischer Fokussierung der Analyt in einer Station aufgetrennt werden und die aufgetrennten Proteine in einer weiteren Station durch Verbinden dieses Querdurchbruchs mit den Trennkanälen in diese transferiert werden. Diese Art der Auftrennung ist der 2D-Elektrophorese ähnlich.

In einer weiteren Ausführungsform sind die Kanäle der Probenplatte an den Kanten so geformt, dass der Querschnitt des Durchbruchs nahe der Öffnungen in Z-Richtung leicht reduziert wird, um die Haftung der Trennmatrix im Kanal zu erhöhen.

In einer weiteren Ausführungsform wird Färben und Entfärben jeweils in getrennten Kammern durchgeführt.

In weiteren Ausführungsformen sind für zusätzliche Prozeduren weitere Stationen denkbar:
- Trocknen des Gels
- alternative Detektionsmethoden z.B. radioaktive Detektoren, UV-Quellen und Detektoren, Laser oder Scanner deren Wellenlänge nicht mit den üblichen Glassorten kompatibel sind
- chemisch - biologische Reaktionen vor der Auswertung bzw. vor dem Blotten.

Es sei betont, dass die Richtungsangaben nur beispielhaft zu verstehen sind und der leichteren Verständlichkeit dienen. Die tatsächliche Orientierung der Analyse und Probenplatten sowie der Zusatzeinrichtungen und auch die Reihenfolge der Stationen ist frei wählbar.

Der Begriff Glasplatte ist nur beispielhaft zu verstehen. Als Material für die Probenplatten kommen alle Materialien in Betracht, die eine ausreichende Steifigkeit und Planheit besitzen und gegen die verwendeten Chemikalien resistent sind. Die optische Transparenz ist nicht notwendig, wenn auf die optische Detektion während der anderen Prozessschritte verzichtet wird. In Frage kommen unter anderem Glas, Keramik, Saphir, Silizium, Polyacrylamid, Polystyrol, Polyester, Polyimid, Polyurethan, Polycarbonat, Polyureas, Polyamid, Polyethylenimin, Polyarylensulfid, Polysiloxan, Polyacetat, Polysulfon oder andere Kunststoffe.

Das Material für die Analyseplatten muss zusätzlich hohe Abriebfestigkeit und gute Wärmeleitung aufweisen. Auch hier eignen sich die oben aufgezählten Materialien, aber auch lokal optimierte Materialien wie z.B. eingeklebte Platten zur besseren Wärmeleitung kommen in Frage. Die Analyseplatten haben eine typisch Dicke von 0.5-3 mm, die auf der der Probenplatte abgewandten Seite durch sandwichartige Zusatzplatten verstärkt werden können, zumindest in den Bereichen in denen keine Peripherie-Einrichtungen angebracht sind.

Nachfolgend wird die Erfindung anhand von weiteren Ausführungsbeispielen beschrieben, die anhand der Abbildungen näher erläutert werden.
- Fig. 1: Eine erste Ausführungsform I einer erfindungsgemäßen Vorrichtung in einer Seitenansicht. In eine Trägerstruktur ist eine Trennkammer integriert.
- Fig. 2: Die Vorrichtung gemäß Fig. 1 in Aufsicht.
- Fig. 3: Eine weitere Ausführungsform II bzw. III einer erfindungsgemäßen Vorrichtung in Aufsicht.
- Fig. 4: Die Vorrichtung gemäß Fig. 3 in Seitenansicht.
- Fig. 5: Ein Blotstempel gemäß Fig. 3 in Aufsicht.
- Fig. 6: Die Vorrichtung gemäß Fig. 3 mit eingesetztem Blotstempel gemäß Fig. 5 in Aufsicht.
- Fig. 7: Eine weitere Ausführungsform IV einer erfindungsgemäßen Vorrichtung in Aufsicht.
- Fig. 8: Die Vorrichtung gemäß Fig. 7 in einer Seitenansicht.
- Fig. 9: Die Vorrichtung gemäß Fig. 7 in Frontansicht.
- Fig. 10: Eine weitere Ausführungsform V einer erfindungsgemäßen Vorrichtung, bestehend aus einer Probenplatte in Aufsicht.
- Fig. 11: Die Probenplatte gemäß Fig. 10 zwischen den zugehörigen Analyseplatten mit zugehörigen Stationen.
- Fig. 12: Die Probenplatte gemäß Fig. 10 in Aufsicht.
- Fig. 13: Die obere Analyseplatte gemäß Fig. 11 in Aufsicht.
- Fig. 14: Die Probenplatte gemäß Fig. 10 in räumlicher Darstellung.
- Fig. 15: Die Analyseplatten gemäß Fig. 11 in räumlicher Darstellung mit Membran-Stempel.
- Fig. 16a-e: Detailausschnitte der Analyseplatten gemäß Fig. 11
- Fig. 17: Eine weitere Ausführungsform VI einer erfindungsgerechten Vorrichtung bestehend aus einer Probenplatte in räumlicher Darstellung
- Fig. 18: Die Probenplatte mit den Gießplatten gemäß Fig. 17 in Seitenansicht
- Fig. 19: Die obere Analysenplatte gemäß Fig. 17 in Aufsicht.
- Fig. 20: Die Probenplatte mit den Analyseplatten in Trennposition gemäß Fig. 17 in einer Seitenansicht.
- Fig. 21: Die Probenplatte mit den Analyseplatten in Färbeposition gemäß Fig. 17 in einer Seitenansicht.
- Fig. 22: Die Probenplatte und eine Membranplatte mit den Analyseplatten in Blotposition gemäß Fig. 17 in einer Seitenansicht.
- Fig. 23: Die Membranplatte mit den Analyseplatten in Reaktionsposition gemäß Fig. 17 in einer Seitenansicht.
- Fig. 24: Die Membranplatte mit den Analyseplatten in Waschposition gemäß Fig. 17 in einer Seitenansicht.
- Fig. 25: Die Membranplatte mit den Analyseplatten in Detektionsposition gemäß Fig. 17 in einer Seitenansicht.

### Einzelelement Ausführungsform I

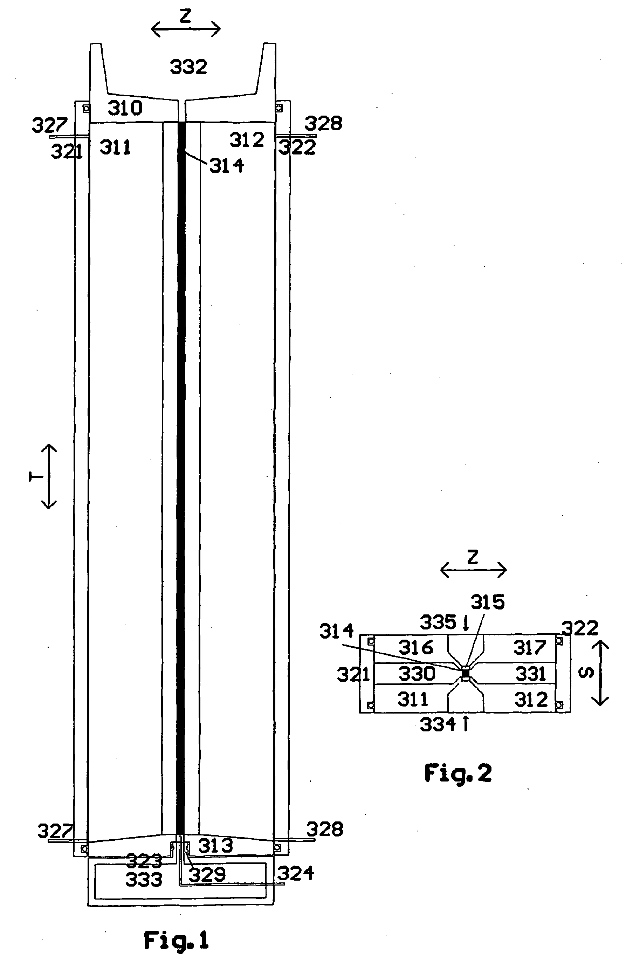

Ein Gelkanal 314 (in Fig. 1 von oben und in Fig.2 von der Seite) mit einem rechteckigen Querschnitt von typisch 1x0.5mm und typisch 100mm Länge wird auf 2 gegenüberliegenden Seiten von 2 ebensobreiten Platten 315 eingeschlossen. Die Platten, bevorzugt aus Glas oder einem ähnlichen Material, haben eine typische Dicke von 0.05 - 0.5mm und sind optisch voll transparent.

Dieser Gelkanal mit den Glasplatten ist in einem Plastik-Träger integriert, um die verschiedenen Zugänge zum Gelkanal gegeneinander abzuschließen und das System mechanisch stabil zu machen. Der Träger hat im Profil (Fig.2) eine Form ähnlich einem Schmetterling mit aufgeklappten Flügeln. Die Flügel sind 311, 312, 316, 317. Durch diese Flügel werden die Hohlräume 330 und 331 definiert, die zum Aufnehmen der Färbe und Entfärbeflüssigkeiten dienen. Die Hohlräume haben direkten Kontakt zum Gelkanal.

Die Hohlräume 330 und 331 sind im Betrieb mit 2 Platten 321 und 322 wasserdicht verschlossen, die jedoch nicht Bestandteil des Trägers sondern der übrigen Apparatur sind. Sie werden über Gummiringe an die Flügel des Trägers gepresst. Der Träger wird an den Enden durch 2 Platten 310, 313 abgeschlossen und gedichtet. Die Platten 321, 322 des Hauptgerätes dichten ebenfalls gegen diese Platten 310, 313 des Trägers. Damit sind besagte Hohlräume 330, 331, die seitlich auf das Gel 314 führen vollständig geschlossen. Über Anschlüsse 327, 328, die in die Wand 321, 322 jeweils oben und unten eingelassen sind, ist es möglich, Flüssigkeit in die Hohlräume zu leiten und wieder abzulassen. Der Boden 313 ist zu diesem Zweck schräg mach außen geneigt, um eine vollständige Entleerung zu erleichtern.

Von oben wird der Gelkanal mittels des Reservoirs 332 kontaktiert. In ihm befindet sich im Betrieb der Elektrolyse-Puffer für die Quellseite. Der Behälter 332 ist Bestandteil des Trägers und hat einen zur Mitte konisch verlaufenden Boden. Die Öffnung im Boden kommuniziert mit dem Gelkanal und dient zum Laden des Gels, also dem Zusetzen der Messsubstanz. Anschließend wird der Becher mit der Pufferflüssigkeit gefüllt. Dabei kann es nützlich sein, mit einer eventuell gelochten Platte (nicht gezeichnet), die den direkten Zugang zu der applizierten Messsubstanz verhindert, das Ausspülen derselben beim Einfüllen des Puffers zu vermeiden. Auch eine andere Verengung des Querschnitts im Zulauf kann sinnvoll sein. Alternativ kann der Ladevorgang auch nass erfolgen, d.h. es wird zunächst der Puffer eingefüllt und im 2. Schritt z.B. mittels einer Pipette in die Vertiefung die Messsubstanz eingebracht.

Von unten wird der Gelkanal mittels der Kammer 333 kontaktiert. Es handelt sich dabei um ein geschlossenes Gefäß 323 das zum Hauptgerät gehört und über einen Gummiring mit der Bodenplatte 313 des Trägers verbunden wird. Es beinhaltet ebenfalls Elektrolyse-Puffer. Beim Aufsetzen des Trägers ist das Reservoir zunächst nicht gefüllt. Beim anschließenden Füllen bildet sich zunächst aufgrund der Schwerkraft in dem Röhrchen 329 eine Luftblase, die eine Benetzung des Gels verhindern würde. Mittels der Kapillare 324 wird diese Luftblase an der höchsten Stelle abgesaugt bzw. kann sie entweichen. U.U. kann es sich dabei als nützlich erweisen, in die Bodenplatte 313 eine seitliche Vertiefung einzulassen, die höher liegt als der Gelkanal, aber nicht gefüllt ist, und aus der die Luft optimal abgesaugt werden kann. In den beiden Reservoiren 332 und 333 ist jeweils noch die Elektrode untergebracht, die zur Stromversorgung während der Elektrolyse dient.

In Fig. 1 sind zwei weitere Zugänge 334, 335 zum Gelkanal 314 sichtbar. Das Gel 314 ist hier mit 2 Glasplatten 315 abgedeckt.

Von den beiden Seiten 334, 335 erfolgt die optische Auswertung. Sie kann in Transmission erfolgen, dann befindet sich auf der einen Seite 334 eine Lichtquelle, und auf der anderen Seite 335 ein Detektor, oder in Reflexion, dann befinden sich Detektor und Lichtquelle auf der gleichen Seite z.B. 335. Als Detektor kommt jedes beliebige Sensorelement in Frage das auf Eigenschaften anspricht, welche die Lage der verschiedenen Proteine anzeigt.

### Einzelelement Ausführungsform II

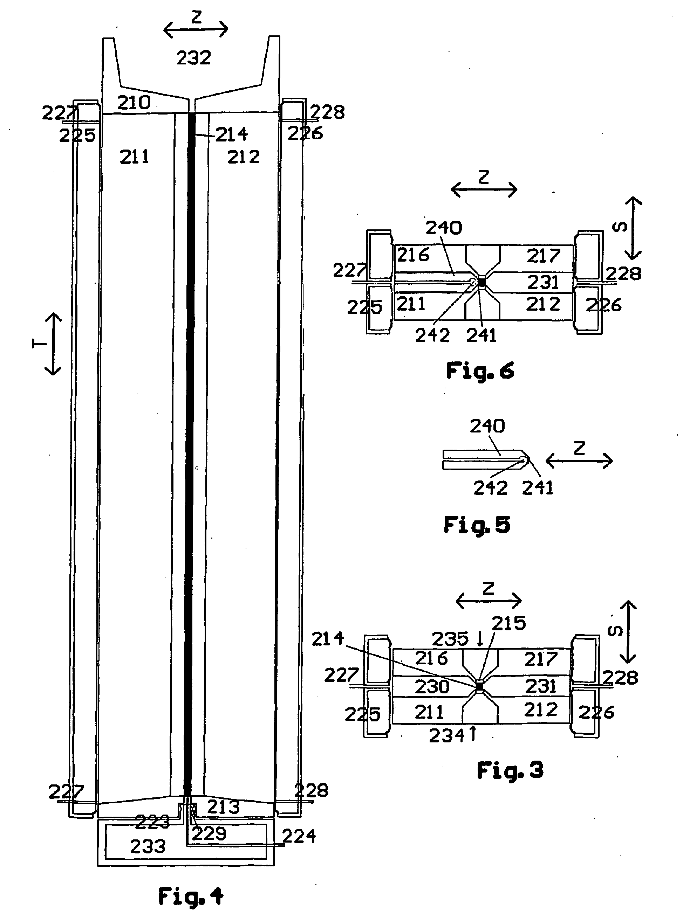

In Fig. 3 und Fig. 4 ist eine alternative Ausführungsform des Hauptgerätes dargestellt. Die Platten 321, 322 des Hauptgerätes sind hier ersetzt durch die Wannen 225, 226. Diese Wannen verschließen ebenso die Hohlräume 230 und 231 des Trägers. Der Vorteil liegt in einer sehr einfachen und sicheren Methode die Dichtigkeit herzustellen. Die Wannen sind jeweils mit einer Gummimembran abgeschlossen, die durch Unterdruck in der Wanne zurückgezogen werden kann und durch Überdruck gleichmäßig an den Träger gepresst wird. Eine Pumpe, falls notwendig auch 2 Pumpen für Überdruck und Unterdruck, reichen aus, um bei allen Trägern im Hauptgerät gleichzeitig die Hohlräume zu verschließen.

Die jeweils doppelt ausgeführten Kapillaren 227 und 228 kommunizieren mit den Hohlräumen 230 und 231 und ermöglichen oben den Einlass von Flüssigkeiten in die Hohlräume und unten deren Ablass.

Die Wannen 225, 226 können von der dem Träger abgewandten Seite aus gekühlt und geheizt werden (nicht gezeichnet). Zur besseren Wärmeankoppelung an die Flüssigkeit in den Hohlräumen 230, 231 ist es möglich die Flüssigkeitseinlässe 227 und 228 jeweils mit einer großen Oberfläche zu versehen und in die Hohlräume ragen zu lassen (nicht gezeichnet).

### Einzelelement, Ausführungsform III

Soll mit dem Träger im Anschluss an die Elektrophorese geblottet werden, so ist ein Stempel 240 (siehe Fig. 5) notwendig, Der Stempel hat die gleiche vertikale Ausdehnung wie der Träger und passt genau in die Kammer 230 des Trägers (Fig. 6). Es trägt an der Spitze als aktives Element eine Blot-Membran 241, die etwa so breit ist wie der Gelkanal 214. Der Gelkanal wird also auf einer Seite auf der gesamten Länge und Breite von der Membran bedeckt. Zu Beginn des Elektrolyseprozesse wird der Stempel in der Kammer 230 locker plaziert, ohne dass die Membran den Gelkanal berührt. Wenn der vertikale Elektrolyseprozess abgeschlossen ist, wird durch Aufblähen der Gummi-Membran der Wanne 225 die Membran 241 des Stempels gegen den Gelkanal 214 gedrückt. Über mehrere Kanäle in dem Stempel kann aus der Kapillare 227 Pufferflüssigkeit in den vertikalen Kanal 242 des Stempels geleitet werden. Diese Flüssigkeit benetzt von hinten die Membran 241. Gleichzeitig wird in die Kammer 231 ebenfalls Pufferflüssigkeit eingeleitet.

Damit kann der Gel-Kanal auf der Längsseite 214 bei anliegender Membran 241 beidseitig von Puffer benetzt werden. In beiden Wannen sind Elektroden untergebracht (nicht gezeichnet), die in den Puffer tauchen und über die der Strom zum Blotten angelegt werden kann.

Hauptapparatur zu Ausführungsform III, die Hauptapparaturen I, II sind im wesentlichen gleich.

In dem Hauptgerät sind je 2 Pumpen untergebracht, um in den Wannen 225, 226 Unterdruck und Überdruck erzeugen zu können. Dadurch werden die Hohlräume 230 und 231 abgedichtet oder im Bloß-Modus wird der Stempel angedrückt.

Es ist eine Pumpe mit Vorratsgefäß vorhanden, um gleichzeitig bei allen Trägern den Tank 233 füllen zu können. Ein Ventil ermöglicht den Verschluss der Kapillare 224.

Eine Pumpe mit Vorratsgefäß ermöglicht das Befüllen des Gefäßes 232.

Für jede Färbe- und Entfärbe- und Entwickler-Lösung die in einen der beiden Hohlräume 230 und 231 eingefüllt werden kann ist eine Pumpe mit Vorratsgefäß vorhanden (alle Träger gemeinsam).

Ein zentraler Abwasserbehälter ist vorhanden.

Ein zentraler Computer steuert alle Vorgänge, er ist über eine Netzschnittstelle mit einem Rechner verbunden, von dem aus der Benutzer das Hauptgerät steuert.

Die Wannen 225, 226 können mittels eines Heiz- und eines Kühlelements temperiert werden, wodurch auch die Flüssigkeit in den Hohlräumen 230, 231 der Träger diese Temperatur annimmt.

### Jedem Träger ist zugeordnet:

a) ein Detektor für die separierte Messsubstanz nach der Auftrennung
b) eine Lichtquelle
c) eine Stromquelle zur Auftrennung
d) eine Stromquelle zum Blotten
e) ein Detektor für den mitgelaufenen Marker.

Die Detektoren können mit einer Eich-Lichtquelle versehen, die Haupt-Lichtquellen können mit einem Eichdetektor versehen werden.

Messprozeduren Ausführungsform III, die Messprozeduren I, II sind im wesentlichen gleich.

### A) Elektrolytische Protein-Trennung und Detektion:

1) Ein Träger wird in die Hauptapparatur gesteckt und dabei mit dem unteren Elektrolysetank 233 verbunden. Je nach Zahl der zu untersuchenden Messsubstanzen wird die benötigte Zahl an weiteren Trägern eingestreckt. Die Gummimembranen der Wannen 225, 226 bzw. die Platten 321, 322 liegen dabei noch nicht an.
2) Eine Metall-Kapillare wird in jeden Behälter 232 eingeklappt.
3) Die Messsubstanzen werden in die Träger mittels einer Pipette eingefüllt.
4) Durch die Metall-Kapillare wird eine definierte Menge Pufferlösung in den Behälter 232 aus einem Vorratsbehälter eingefüllt.
5) Der Behälter 233 wird ebenfalls mit Pufferlösung gefüllt. Dabei entweicht die Luft aus der Kapillare 224. Damit ist das Gel kontaktiert.
6) Die beiden Gummimembranen der Wannen 225, 226 werden aufgeblasen, bzw. die beiden Platten 321, 322 werden an den Träger angelegt. Damit sind die Hohlräume 230, 231 abgeschlossen und befüllbar.
7) Über die Metall-Kapillare und die Elektrode des Tanks 233 wird Strom in vorher festgelegter Höhe an das Gel angelegt. Dabei ist jedem Träger eine individuelle Stromquelle zugeordnet. Die Messsubstanz läuft jetzt im Gel und separieret sich je nach Molekulargewicht. Nach Abschluss dieses Prozesses wird der Strom abgeschaltet.
8) In die Hohlräume 230, 331 wird jetzt Färbeflüssigkeit aus einem weiteren Vorratsbehälter eingefüllt. Sie kann über die Heizmöglichkeiten an der Rückseite der Wannen erhitzt werden, um die Reaktion zu beschleunigen. Die Färbereaktion kann nach Temperatur und Zeit beliebig eingestellt werden. Nach Abschluss der Färbeprozedur wird die Färbeflüssigkeit in den Abwasserbehälter abgepumpt.
9) Jetzt wird die Entfärbeflüssigkeit für das Gel eingefüllt. Wieder sind Reaktionszeit und Reaktionstemperatur frei wählbar. Danach wird die Entfärbeflüssigkeit in den Abwasserbehälter abgepumpt.

### Nach Abschluss der Gel-Behandlung erfolgt die Auswertung:

10) Die Lichtquellen vor den Trägern werden eingeschaltet. Die Detektoren registrieren das transmittierte Licht in Abhängigkeit von der Laufstrecke im Gel und damit das Intensitätsprofil als Funktion des Molekulargewichts in der Messsubstanz.
11) Der Computer wertet die Daten aus und gibt sie an die Bedienkonsole weiter.
12) Die Luft aus beiden Gummimembranen der Wannen 225, 226 wird abgelassen

### Ende der Automatischen Phase:

13) Der Bediener entfernt den Träger.

### B) Elektrolytische Protein-Trennung und Blotten:

14) In einen Träger wird der Stempel 240 lose eingeführt.
15) Der Träger wird in die Hauptapparatur gesteckt und dabei mit dem unteren Elektrolysetank 233 verbunden. Je nach Zahl der zu untersuchenden Messsubstanzen wird die benötigte Zahl an weiteren mit Stempeln versehenen Trägern eingesteckt. Die Gummimembranen der Wannen 225, 226 liegen dabei noch nicht an.
16) Eine Metall-Kapillare wird in jeden Behälter 232 eingeklappt.
17) Die Messsubstanzen werden in die Träger mittels einer Pipette eingefüllt.

### Beginn der automatischen Phase:

18) Durch die Metall-Kapillare wird eine definierte Menge Pufferlösung in den Behälter 232 aus einem Vorratsbehälter eingefüllt.
19) Der Behälter 233 wird ebenfalls mit Pufferlösung gefüllt. Dabei entweicht die Luft aus der Kapillare 224. Damit ist das Gel kontaktiert.
20) Die Gummimembran der Wanne 226 wird aufgeblasen. Damit ist die Kammer 231 abgeschlossen und befüllbar.
21) Über die eingeklappte Metall-Kapillare und die Elektrode des Tanks 233 wird Strom in vorher festgelegter Höhe an das Gel angelegt. Dabei ist jedem Träger eine individuelle Stromquelle zugeordnet. Die Messsubstanz läuft jetzt im Gel und separieret sich je nach Molekulargewicht. Nach Abschluss dieses Prozesses wird der Strom abgeschaltet.
22) Die Gummimembran der Wannen 225 wird aufgeblasen. Damit wird der Stempel 240 an das Gel gedrückt.
23) Über die Kanülen 227, 228 wird Puffer in die Hohlräume 231 und 242 geleitet. Damit ist das Gel kontaktiert und die Membran liegt an.
24) Über die Elektroden in den Wannen 225, 226 wird Strom in vorher festgelegter Höhe und Dauer angelegt. Damit wird die Messsubstanz aus dem Gel auf die Membran geblottet. Danach wird der Strom abgeschaltet.
25) Die Luft aus beiden Gummimembranen der Wannen 225, 226 wird abgelassen

### Ende der Automatischen Phase:

26) Der Bediener entfernt den Träger aus dem Hauptgerät und entnimmt den Stempel mit der Membran zur Weiterverarbeitung.

### Einzelelement Ausführungsform IV

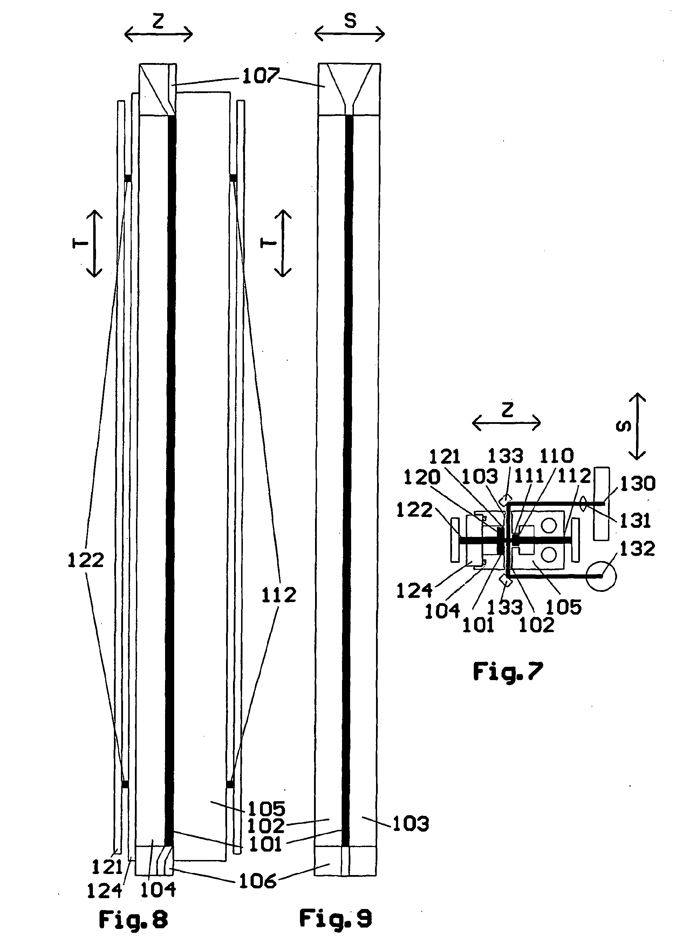

Fig.7, Fig.8 und Fig.9 zeigen den Querschnitt, die Seiten - und die Frontansicht eines Einzelelements. Es handelt sich um einen Kanal 101 von typisch 100mm Länge der in einem Hauptgerät installiert ist und automatisch mit Gel gefüllt werden kann, das anschließend im Kanal polymerisiert.

Der Kanal wird in einer Richtung durch zwei Glasplatten 102, 103 begrenzt, die die gleiche Breite wie das Gel aufweisen, typisch 1mm. Der Abstand der beiden Glasplatten von typisch 0.5mm bestimmt die Dicke des Gels. In der Richtung vom Gel weg sind die Glasplatten wesentlich länger, wodurch es möglich ist, auf einer Seite die Kammer 105 wasserdicht mit den Glasplatten zu verbinden. Auf der anderen Seite ist die Kammer 104 mit den Glasplatten wasserdicht verbunden, deren Deckel 124 kann abgenommen werden. Der Kanal 101 wird auf der gesamten Länge von den Glasplatten und den beiden Kammern eingeschlossen. An dem oberen und unteren Ende sorgen 2 durchbohrte Endstücke 106 und 107 für die nötige Dichtigkeit (Fig.8 und Fig.9). Durch sie ist der Gel-Kanal von oben und unten kontaktierbar.

Innerhalb der Kammern kann der Gelkanal 101 seitlich durch die Bestandteile der beiden Kammern 104 und 105 direkt abgedeckt werden: Die Platte 110 mit der Dichtung 111 verschließt den Kanal von rechts über die gesamte Länge. Die Platte 120 mit der Dichtung 121 verschließt den Kanal von links über die gesamte Länge. Beide Platten können von außen angedrückt und weggezogen werden. Dazu ragen aus den Kammern 105 und 104 jeweils zwei gedichtetete Stäbe 112 und 122 die mit den Platten verbunden sind. Die Stäbe werden aus Stabilitätsgründen jeweils von einer Platte verbunden, die es erlaubt die Dichtungen anzudrücken und abzuziehen.

Von der Lichtquelle 132 wird über die beiden Spiegel 133 das Licht auf den Sensor 130 geleitet, meist ein CCD-Array. Dabei liegt das Gel 101 im Strahlengang und kann ausgelesen werden.

### Hauptapparatur Ausführungsform IV

In dem Hauptgerät der Ausführungsform IV sind ein oder mehrere obiger Einzelelemente untergebracht. Jedes der Elemente kann zur Analyse eines anderen Analyten verwendet werden, wird aber gemeinsam betrieben. Dazu sind im Hauptgerät an einer Stelle Vorratsgefäße für die Bestandteile des Gels vor der Polymerisierung vorhanden. Daraus kann mittels Pumpen ein Reaktionsgefäß gefüllt werden, das die Gel-Substanzen in dem gewünschten Mischverhältnis beinhaltet. Diese Flüssigkeit wird mittels eines Schlauchsystems an die Trichter 107 der Gel-Kanäle 101 geleitet. Weiter ist ein Schlauchsystem mit Ventilen an der Austrittsöffnung 106 der Gelkanäle vorgesehen. Es mündet in einem Abwasserbehälter. Weiter ist ein Schlauchsystem vorgesehen, das aus einem Vorratsgefäß Puffer in den Trichter 107 füllt. Weiter ist ein Schlauchsystem vorgesehen, das die Kammer 105 mit Färbe- und Entfärbe-Lösung versorgt und im Betrieb durch Umpumpen das Gel spült. Das Schlauchsystem ermöglicht auch das Einfüllen von Blot-Puffer in die Kammer 105. Weiter ist ein Schlauchsystem vorgesehen, das die Kammern 104 mit Blot-Puffer versorgt. Kühl- und Heizelemente ermöglichen das Thermostatisieren aller Flüssigkeitskreisläufe.

Pneumatische Zylinder sorgen für die gemeinsame Bewegung aller Dichtungen 110 und 120 an den Gel-Kanal, Federn drücken die Dichtungen wieder zurück.

Pro Einzelelement ist im Hauptgerät eine Hochspannungsquelle vorhanden, die mit Elektroden verbunden werden kann, die in die Pufferbehälter 107 und 106 münden. Die Spannungsquelle kann auch an die Elektroden in den Kammern 104 und 105 angeschlossen werden. Zum Auslesen der Sensorelemente 130 ist Auswerte-Elektronik vorgesehen. Eine Computersteuerung kontrolliert die Arbeitsabläufe.

### Messprozedur Ausführungsform IV

### A) Gießen des Gels in den Gel-Kanal 101

27) Die beiden Dichtungen 111 und 121 werden durch Betätigung der Stempel 112 und 122 gegen die Glasplatten 102 und 103 gedrückt. Dadurch ist der Gel-Kanal geschlossen. Aus Vorratsgefäßen werden Wasser, Acrylamid und Vernetzer durch die Endstücke 107 in der vorherbestimmten Konzentration in den Kanal geleitet. Die Luft wird verdrängt, indem eine Überschussmenge Flüssigkeit durch das Endstück abgeleitet wird.
28) Die Flüssigkeit in der Kapillare bleibt stehen und polymerisiert.
29) Die beiden Dichtungen 111 und 121 werden von dem Gelkanal entfernt.

### B) Laden des Analyten.

30) Das Gel wird über das Endstück 107 mit dem Analyten beladen.

### C) Elektrophorese

31) In das Endstück 107 wird über eine Kapillare Puffer eingefüllt.
32) Das Endstück 106 das mit Gel gefüllt ist, wird durch Anheben des Pufferspiegels in einer Wanne um das Endstück herum kontaktiert. Beide Enden ragen damit in elektrisch kontaktierte Pufferlösungen.
33) An die Pufferlösungen wird Spannung angelegt, die Elektrophorese findet statt.
34) Während der Elektrophorese wird durch Kühlbohrungen in der Kammer 105 Wasser geeigneter Temperatur geleitet. Dadurch wird die gewünschte Temperatur des Gels eingestellt.
35) Der Sensor 130 detektiert die Lauffront des Gels.
36) Ist die Elektrolyse abgeschlossen, wird die Spannung abgeschaltet.

### D) Färben

37) Aus den Vorratsgefäßen wird Färbelösung in die Kammer 105 geleitet.
38) Während des Färbens wird durch Kühlbohrungen in der Kammer 105 Wasser geeigneter Temperatur geleitet. Dadurch wird die gewünschte Temperatur des Gels eingestellt.
39) Nach Abschluss des Färbevorgangs werden Reste der Färbeflüssigkeit durch Wasser entfernt.
40) Die Trennmatrix wird mit Entfärbelösung gereinigt.
41) Nach Abschluss des Entfärbevorgangs werden Reste der Entfärbeflüssigkeit durch Wasser entfernt.

### E) Optisches Auswerten

42) Das Gel wird mittels des Sensors optisch vermessen und die Daten an den Steuercomputer weitergeleitet.

### F) Blotten

43) Der Deckel 124 wird vom Anwender entfernt, die Dichtung 121 durch eine Blot-Membran ersetzt und der Deckel wieder eingesetzt.
44) Die Blot-Membran in der Position der Dichtung 121 wird an das Gel gepresst.
45) Die Kammern 104 und 105 werden mit Blot-Puffer gefüllt.
46) Mittels 2 Elektrode in den beiden Kammern wird die Bloß-Spannung an das Sandwich angelegt.
47) Während des Blotten wird mittels Kühlbohrungen in der Kammer 105 Wasser geeigneter Temperatur geleitet. Dadurch wird die gewünschte Temperatur des Bloß-Puffers und des Gels eingestellt.
48) Die Blot-Membran in der Position der Dichtung 121 wird zurückgezogen.
49) Der Anwender entnimmt die Blot-Membran zusammen mit dem Deckel 124.

### G) Reinigen

50) Beide Dichtungen 111 und 121 werden an den Gel-Kanal gerückt.
51) Über das Endstück 107 wird Wasser unter erhöhtem Druck durch den Gel-Kanal in den Abwasserbehälter geleitet.
52) Die Kammern 104 und 105 werden mit Wasser gespült.

### Einzelelement Ausführungsform V

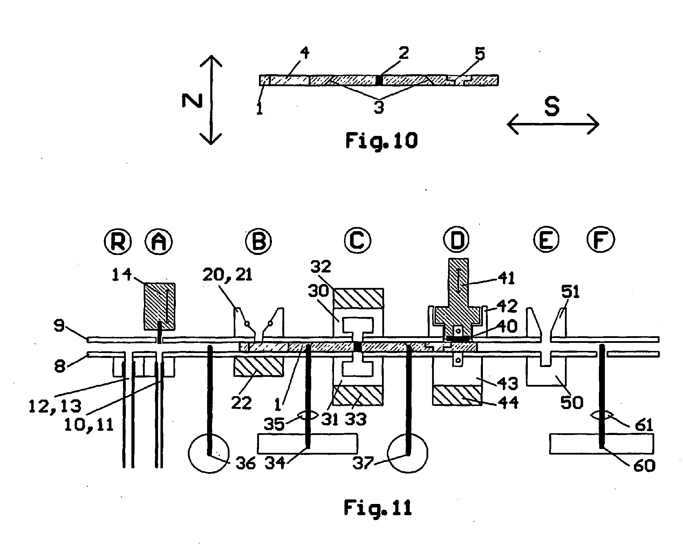

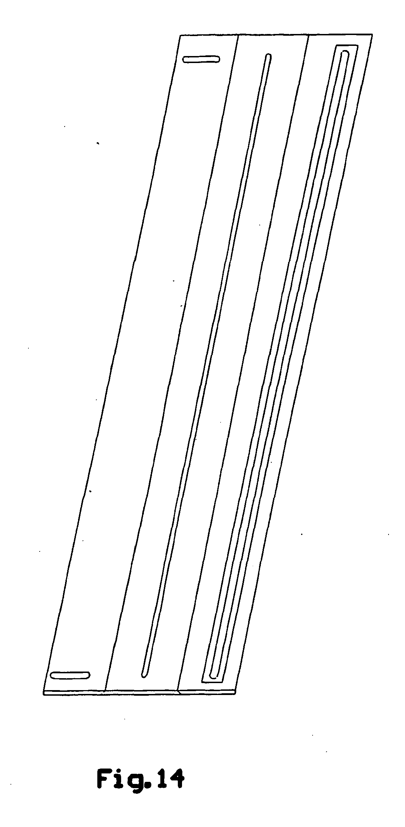

In der Ausführungsform V durchläuft ein Einzelelement verschiedene Stationen A-F, in denen jeweils ein oder mehrere Prozessschritte durchgeführt werden. Der Gel-Kanal wird von einer Platte - der Probenplatte - zu den einzelnen Stationen transportiert. In Fig.10, Fig.12 und Fig.14 ist diese Platte 1 im Schnitt, in Aufsicht und schräg von oben dargestellt. Typische Abmessungen sind etwas mehr als 100mm Länge und 1mm Dicke. Ein Schlitz 2 in der Mitte von typisch 0.5mm Breite und 100mm Länge nimmt im Betrieb das Gel auf. Die Kanten des Schlitzes sind präzise und scharf um sicherzustellen, dass das polymerisierte Gel beim Verschieben geschnitten werden kann. In die Platte sind 2 optisch spiegelnde Flächen 3 unter 45° eingelassen. Eine Möglichkeit zu ihrer Herstellung ist: Die Platte mit dem integrierten Schlitz wird an der entsprechenden Stelle unter 45° geschnitten, poliert und metallisch bedampft. Danach werden die beiden Teile wieder verbunden. Eine Möglichkeit zur Herstellung des Schlitzes ist das Zusammensetzen der Platte aus 2 Einzel-Platten, die durch Spacer an den Enden auf Abstand gehalten werden. Weitere Schlitze 4 dienen zum Reinigen und eine Wannen 5 zur Aufnahme einer Membran.

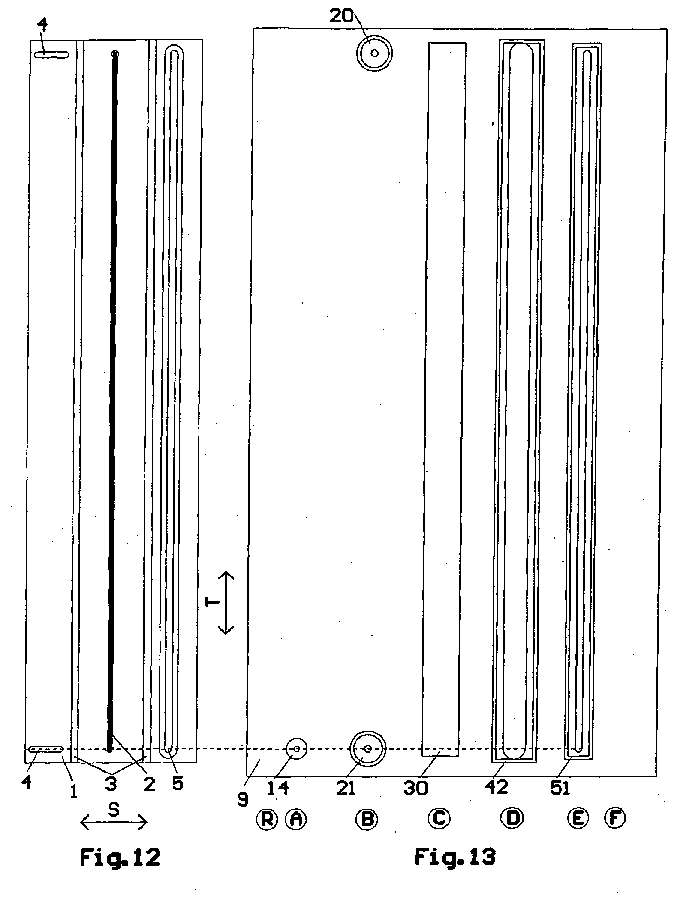

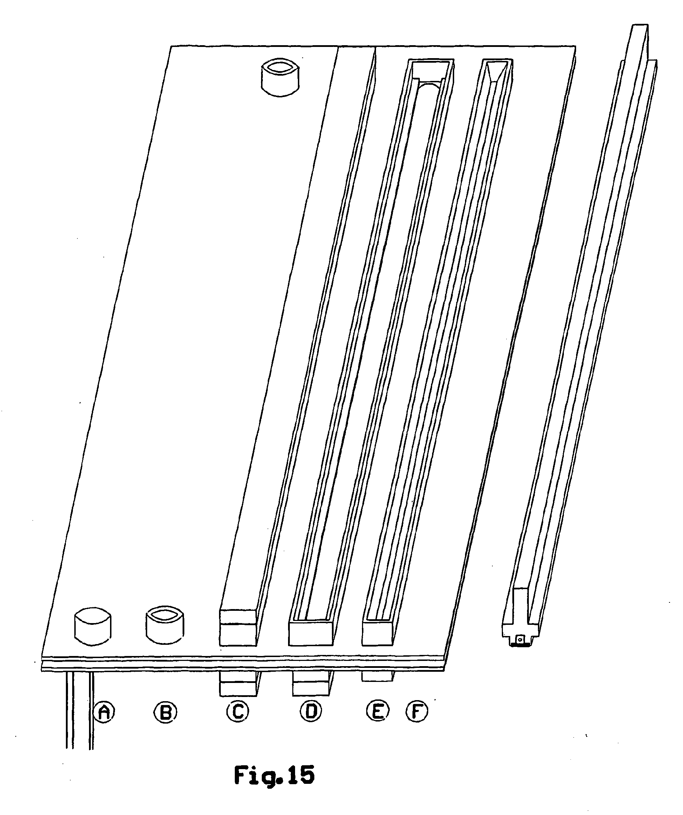

In Fig.11 sind die untere 8 und obere 9 Analyseplatte zusammen mit den für jede Station benötigten Peripherie-Einrichtungen im Schnitt dargestellt. In Fig. 13 ist in Aufsicht die obere Analyseplatte 9 dargestellt. Die Probenplatte 1 wird von beiden Analyseplatten eingeschlossen. Fig. 15 zeigt eine räumliche Darstellung der Analyseplatten.

Mechanisch, pneumatisch oder elektrisch wird sichergestellt, dass während der Ausführung einer Prozedur die Analyseplatten so eng an die Probenplatte 1 gepresst werden, dass die Kanäle der Probenplatte sicher wasserdicht abgeschlossen werden, soweit nicht entsprechende Durchbrüche in den Analyseplatten vorhanden sind. Das Verschieben der Probenplatte mit dem Gel zwischen den Analyseplatten zum Wechsel der Prozeduren wird möglich durch Entspannen dieses Mechanismus'.

In Station A wird das Gel gegossen. Von unten steht ein Zufluss 10 zur Verfügung, der den Kanal 2 kontaktiert. Ein Abfluss 11 am anderen Ende des Kanals ist ebenfalls von unten in die Analyseplatte 8 eingelassen. Ein Zylinder an der Vorderseite des Stempels 14 kann durch die Analyseplatte 9 in den Kanal 2 der Probenplatte gedrückt werden. Der Kanal enthält an dieser Stelle eine vorzugsweise runde Erweiterung vom Durchmesser dieses Zylinders. In Ruhelage hält eine Feder den Stempel über der Analyseplatte. Die beiden Abflüsse 12 und 13 mit erhöhtem Querschnitt sind der Station R, die dem Reinigen der Zu- und Abflüsse 10, 11 dient, zuzurechnen. Die beiden Durchbrüche 4 der Probenplatte korrespondieren damit.

In Station B wird die Probensubstanz auf die Trennmatrix aufgebracht und aufgetrennt. Zwei Trichter 20 und 21 sind mittels Durchbrüchen in der oberen Analyseplatte mit den Enden des Kanals 2 verbunden. Sie beinhalten Elektroden zur Kontaktierung einer darin eingefüllten Flüssigkeit. Der Gel-Kanal steht durch die untere Analyseplatte mit einem Wärmetauscher 22 in Verbindung, der die gesamte Länge des Kanals umfasst. Der Wärmetauscher kann z.B als Peltier-Element oder als längs durchbohrter Metall-Kanal der mit Flüssigkeit durchspült wird realisiert werden. Ein solcher Wärmetauscher kann auch auf der oberen Analyseplatte zwischen den beiden Trichtern angeordnet werden (nicht gezeichnet). Weiter kann in der Station B der optische Detektor 34 eingesetzt werden um die Lauffront zu erkennen. Der Strahlengang des Lichts geht von der Lichtquelle 36 über die in der Probenplatte 1 integrierten Spiegel 3 durch den Gel-Kanal (2, über die Linse 35 in den Detektor 34. (In Fig.11 ist die Probenplatten in der Station C gezeichnet, der Strahlengang geht in dieser Position von der alternativen Lichtquelle 37 aus).

In Station C wird das Gel gefärbt und ausgelesen. Zwei gedichtete Kammern 30 und 31 sind mittels Durchbrüchen in der oberen und unteren Analyseplatte mit dem Gel-Kanal 2 verbunden. Die Kammern können durch Wärmetauscher 32 und 33 auf eine geeignete Temperatur gebracht werden. Weiter kann in Station C der optische Detektor 34 eingesetzt werden. Der Strahlengang des Lichts geht von der Lichtquelle 37 über die in der Probenplatte 1 integrierten Spiegel 3 durch den Gel-Kanal 2, über die Linse 35 in den Detektor 34.

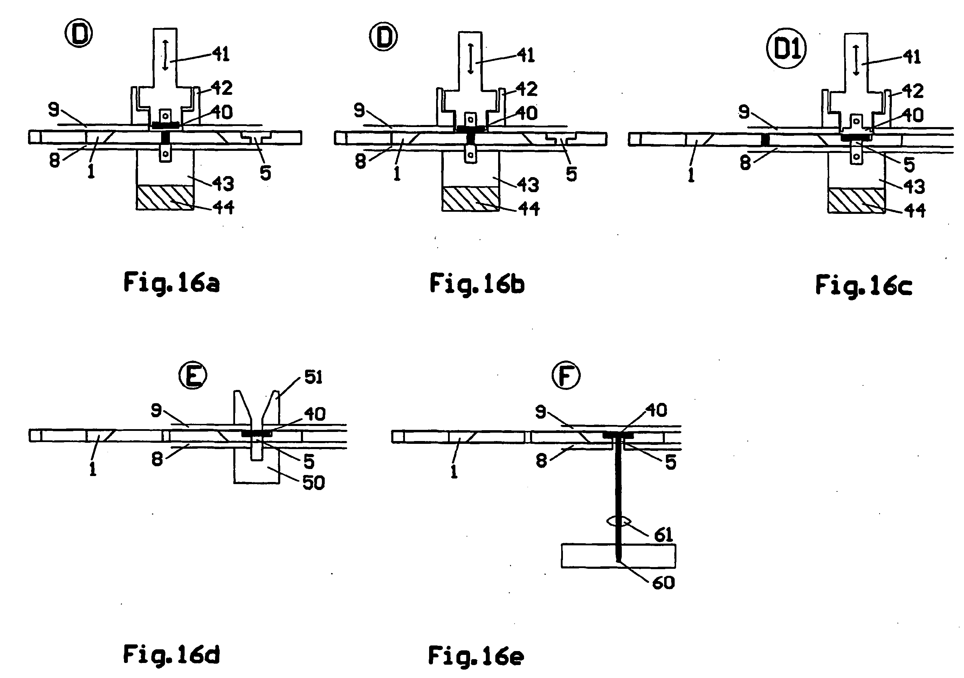

In Station D (siehe Fig. 11, 16a, 16b) wird das Gel geblottet. Die Kammer 43 mit einer integrierten Elektrode kontaktiert den Gelkanal 2 mittels eines Durchbruchs in der unteren Analyseplatte. Die Kammer kann durch einen Wärmetauscher 44 auf eine geeignete Temperatur gebracht werden. Die Kammer kann durch den Zulauf auf leichten Überdruck gebracht werden, um den Blot-Vorgang zu beschleunigen. Von oben wird der Gelkanal durch einen Durchbruch in der oberen Analyseplatte kontaktiert, der von einer oben offenen Wanne 42 begrenzt wird. In die Wanne kann ein Stempel 41 eingesetzt werden, der an der Vorderseite mit einer Membran 40 versehen ist, die durch den relativ breiten Durchbruch direkt auf dem Gel-Kanal 2 zu liegen kommt. An der Rückseite der Membran ist ein Hohlraum vorgesehen der eine Elektrode enthält. Der Hohlraum kann mit Flüssigkeit gefüllt werden und darin Unterdruck erzeugt werden. Eine Feder hält den Stempel in Ruhelage über dem Kanal.

In Station D (siehe Fig. 16c) ist eine zweite Position D1 der Probenplatte möglich, in der die Membran in der Vertiefung 5 der Probenplatte abgelegt wird. Dies wird durch leichten Überdruck in dem Hohlraum des Stempels 41 unterstützt.

In Station E (siehe Fig. 16d) wird die an einer Membran 40 die in der Vertiefung 5 der Probenplatte 1 liegt eine Immunreaktion ausgeführt. Dazu wird von oben in die Wanne 51 das Immunreagenz eingefüllt und in der Kammer 50 von unten leichter Unterdruck erzeugt.

In Station F (siehe Fig. 16e) wird mittels des Sensors 60 mit der Linse 61 der Membran-Steifen ausgelesen.

In einer weiteren Station wird der Gel-Kanal mit einem 2D-Gel in Kontakt gebracht. Die Anordnung ist nicht explizit gezeichnet. Sie entspricht der Station D, mit dem Unterschied, dass anstelle des Blot-Stempels 41 eine Gel-Kammer mit 2 Platten und eingeschlossenem Gel eingesetzt wird. Typische Abmessungen der Gel-Kammer sind: 100mm Länge (wie der Gel-Kanal 2), 0.5mm Dicke des Gels und 50-100mm Lauflänge des Gel weg von der oberen Analyseplatte.

### Hauptapparatur Ausführungsform V

In dem Hauptgerät der Ausführungsform V sind ein oder mehrere obiger Einzelelemente untergebracht. Jedes der Elemente kann zur Analyse eines separaten Analyten verwendet werden, wird aber gemeinsam mit weiteren Elementen betrieben. Dazu werden in dem Hauptgerät viele Probenplatten horizontal mechanisch gekoppelt, vorzugsweise so, dass die Gel-Kanäle parallel liegen. Sie können so durch einen Verschiebemechanismus gemeinsam bewegt werden. Am einfachsten kann dies durch eine durchgehende Glasplatte geschehen. Auch die einzelnen Analyseplatten werden jeweils zu einer gemeinsamen durchgehenden Platte gekoppelt. Dadurch wird eine sehr einfache Mechanik ermöglicht, die eine Vielzahl von Gel-Kanälen gemeinsam in die jeweiligen Positionen bringen kann. Eine alternative Konstruktion ist die Verwendung von einzelnen Glasplatten aus denen sich die Gesamt-Probenplatte zusammensetzt. Diese Glasplatten werden von zwei Führungen auf beiden Längsseiten gehaltert, die den richtigen Abstand zwischen den Glasplatten sicherstellen und die gemeinsame Bewegung ermöglichen.

Der Wärmekontakt zum Gel-Kanal kann unter Fortfall aller in der Einzelkonstruktion beschriebenen Wärmetauschern auch dadurch sichergestellt werden, dass die gesamte untere Analyseplatte in einer flüssigkeitsgefüllten Wanne liegt. Die Sensorelemente 34, 35 und Lichtquellen 36, 37 müssen in diesem Fall außerhalb dieser Wanne angebracht werden. Falls keine flüssigkeitsfreien Zugänge vorgesehen werden, durchläuft der optische Strahlengang zusätzlich die KühlFlüssigkeit.

Die obere Analyseplatte ist klappbar angebracht, um eine sehr einfache Wartung der Probenplatte zu ermöglichen. Eine weitere Platte ist über der oberen Analyseplatte ebenfalls klappbar angebracht. Sie trägt die Zuführungskapillaren zu der Trichtern der oberen Analyseplatte, die Mechanik zum Andrücken der oberen Analyseplatte, die Mechanik zum Andrücken des Ladetaschenstempels und die Mechanik zum Andrücken des Blot-Stempels sowie die Elektrodenzuführungen.

In dem Hauptgerät sind Vorratsgefäße für die Bestandteile des Gels vor der Polymerisierung vorhanden. Daraus kann mittels Pumpen ein Reaktionsgefäß gefüllt werden, das die Gel-Substanzen in dem gewünschten Mischverhältnis beinhaltet. Daraus wird mittels eines Schlauchsystems und Ventilen die Kapillare 10 gefüllt. Weiter ist ein Schlauchsystem mit Ventilen an der Austritts-Kapillare 11 der Gel-Kanäle vorgesehen. Es mündet in einem Abwasserbehälter. Weiter ist ein Schlauchsystem vorgesehen, das aus einem Vorratsgefäß Puffer in die Trichter 20 und 21 füllt. Weiter ist ein Schlauchsystem vorgesehen, das die Kammern 30 und 31 mit Färbe- und Entfärbe-Lösung versorgt und im Betrieb durch Umpumpen das Gel spült. Weiter ist ein Schlauchsystem vorgesehen, das die Kammern 43 und 42 mit Blot-Puffer versorgt.

Pro Einzelelement ist im Hauptgerät eine Hochspannungsquelle vorhanden, die an die Elektroden in den Trichtern 20 und 21 angeschlossen werden kann. Die Spannungsquelle kann auch an die Elektroden in den Kammern 42 und 43 angeschlossen werden. Zum Auslesen der Sensorelemente 34 ist Auswerte-Elektronik vorgesehen. Eine Computersteuerung kontrolliert die Arbeitsabläufe.

### Messprozedur Ausführungsform V

### Station A) Herstellung der Trennmatrix

53) Die obere Analyseplatte 9 wird gelockert, die Probenplatte 1 wird in Position A gebracht und die obere Analyseplatte 9 wird wieder angedrückt.
54) Der Ladetaschen-Stempel 14 wird durch die Pneumatik eingedrückt.
55) Aus Vorratsgefäßen werden Pufferlösung, Acrylamid, und Vernetzer in der vorherbestimmten Konzentration in einer Mischkammer gesammelt und durch die Kapillaren 10 in den Gel-Kanal 2 geleitet. Die Luft wird verdrängt, indem eine Überschussmenge Flüssigkeit durch die Kapillare 11 abgeleitet wird.
56) Die Flüssigkeit in dem Gel-Kanal 2)bleibt stehen und polymerisiert.
57) Der Ladetaschen-Stempel 14 wird entspannt.

### Station B) Laden des Analyten und Auftrennung

58) Die obere Analyseplatte 9 wird gelockert, die Probenplatte 1 wird in Position B gebracht und die obere Analyseplatte 9 wird wieder angedrückt.
59) Das Gel wird vom Anwender über den Trichter 20 mit dem Analyten beladen.
60) In die Trichter 20 und 21 wird über je eine Kapillare Puffer eingefüllt.
61) Über die Elektroden wird an die Pufferlösungen Spannung angelegt, die Elektrophorese findet statt.
62) Die Wärmetauscher bzw. die Wanne unter der unteren Analyseplatte sorgen für die gewünschte Temperatur des Gels.
63) Der Sensor 34 detektiert die Lauffront des Gels.
64) Ist die Elektrolyse abgeschlossen, wird die Spannung abgeschaltet.

### Station C) Färben und optisches Auswerten

65) Die obere Analyseplatte 9 wird gelockert, die Probenplatte 1 wird in Position C gebracht und die obere Analyseplatte 9 wird wieder angedrückt.
66) Aus den Vorratsgefäßen wird Färbelösung in die Kammern 30 und 31 geleitet.
67) Die Wärmetauscher bzw. die Wanne unter der unteren Analyseplatte sorgen für die gewünschte Temperatur des Gels.
68) Nach Abschluss des Färbevorgangs wird die Färbeflüssigkeit abgelassen und aus den Vorratsgefäßen Entfärbelösung zur Entfärbung der Trennmatrix in die Kammern 30 und 31 geleitet.
69) Nach Abschluss des Entfärbevorgangs wird die Entfärbeflüssigkeit abgelassen.
70) Das Gel wird mittels des Sensors optisch vermessen und die Daten an den Steuercomputer weitergeleitet.

### Station D) Blotten des Analyten auf eine Membran

71) Der Blot-Stempel 41 wird zu Beginn, gleichzeitig mit dem Laden des Analyten, mit einer Blot-Membran versehen.
72) Die obere Analyseplatte 9 wird gelockert, die Probenplatte 1 wird in Position D gebracht und die obere Analyseplatte 9 wird wieder angedrückt.
73) Die Kammer 43 und der Hohlraum des Stempels 41 werden mit Blot-Puffer gefüllt.
74) Der Blot-Stempel 41 wird durch die Pneumatik angedrückt.
75) Über die Elektroden wird an die Pufferlösungen Spannung angelegt, das Blotten findet statt. Der Vorgang kann durch Unter- bzw. Überdruck noch verstärkt werden oder ausschließlich dadurch erfolgen.
76) Die Wärmetauscher bzw. die Wanne unter der unteren Analyseplatte sorgen für die gewünschte Temperatur des Gels.
77) Der Blot-Stempel 41 kann vom Anwender entnommen werden oder verbleibt im Gerät um die Immundetektion durchzuführen.

### Station E,F) Immundetektion auf der Membran

78) Der Blot-Stempel 41 wird durch die Feder zurückgezogen
79) Die obere Analyseplatte 9 wird gelockert, die Probenplatte 1 wird in Position D1 gebracht und die obere Analyseplatte 9 wird wieder angedrückt.
80) Der Blot-Stempel 41 wird durch die Pneumatik angedrückt.
81) In dem Hohlraum des Stempels 41 wird leichter Überdruck erzeugt. Die Membran 40 wird dadurch in den Hohlraum 5 der Probenplatte 1 gedrückt.
82) Der Blot-Stempel 41 wird durch die Feder zurückgezogen.
83) Die obere Analyseplatte 9 wird gelockert, die Probenplatte 1 wird in Position E gebracht und die obere Analyseplatte 9 wird wieder angedrückt.
84) In die Wanne 51 wird das Immunreagenz eingefüllt und durch leichten Unterdruck in der Kammer 50 durch die Membran gezogen.
85) Jetzt können an der Membran Waschschritte durchgeführt werden die z.B. in der Station C ausgeführt werden. Weitere, nachfolgende Immunreagenzien können in der Station E appliziert werden.
86) Die obere Analyseplatte 9 wird gelockert, die Probenplatte 1 wird in Position F gebracht und die obere Analyseplatte 9 wird wieder angedrückt.
87) Mittels des Detektors 60 werden durch Lumineszenz oder optische Reflexion oder andere Methoden die auf der Membran positionierten Proteine nachgewiesen.

### Station R) Reinigung

88) Die obere Analyseplatte 9 wird gelockert, die Probenplatte 1 wird in Position R gebracht und die obere Analyseplatte 9 wird wieder angedrückt.
89) Aus den Kapillaren 10 und 11 wird Wasser und anschließend verdünnte NaOH unter erhöhtem Druck durch die Kanäle 4 in die Kapillaren 12 und 13 und damit in den Abwasserbehälter gespült.
90) Die obere Analyseplatte 9 wird gelockert, die Probenplatte 1 wird in Position A gebracht und die obere Analyseplatte 9 wird wieder angedrückt.
91) Aus der Kapillare 10 wird Wasser unter erhöhtem Druck durch den Gel-Kanal 2 in die Kapillare 11 damit in den in den Abwasserbehälter gespült.

### Gieß-, Analyse- und Immun-Bereich der Ausführungsform VI

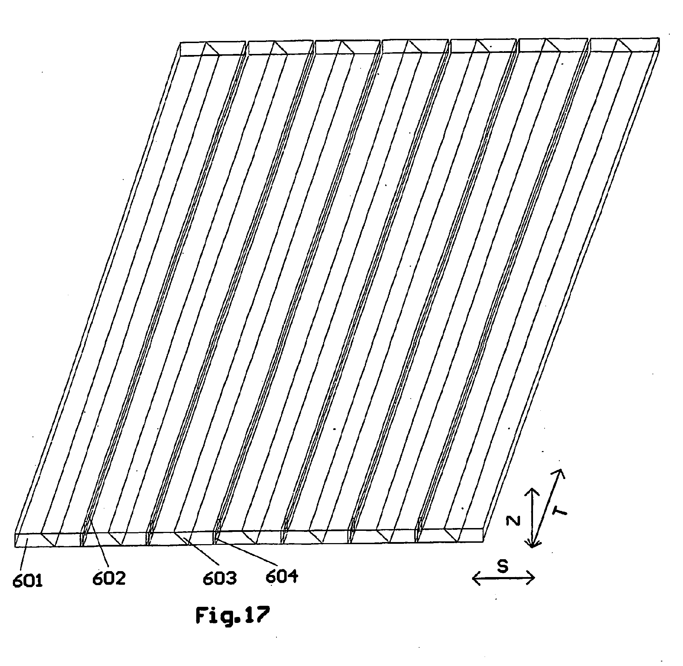

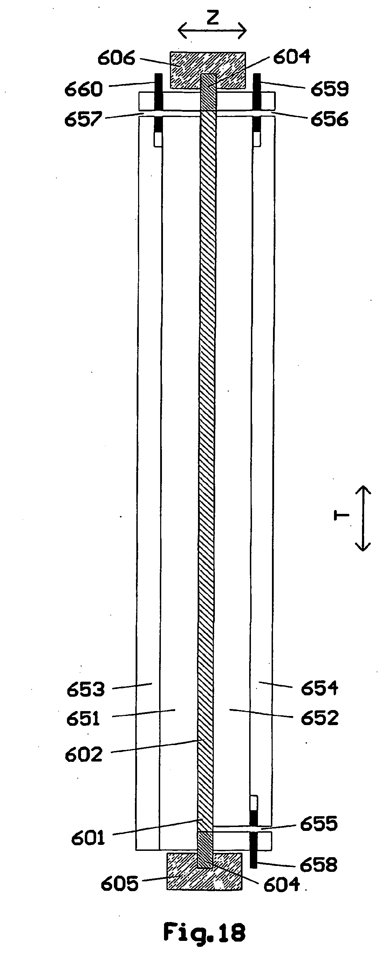

In der Ausführungsform VI sind mehrere einzelne Gel-Kanäle in einer Probenplatte untergebracht, vorzugsweise parallel. Fig. 17 zeigt eine solche Platte 601, die im gezeichneten Beispiel 6 Kanäle einschließt. Typische Abmessungen der Platte sind 1-2 mm Dicke (Z-Richtung), 50-100 mm Länge (T-Richtung) und 5-10 mm Abstand zwischen 2 Kanälen (S-Richtung). Die Gesamtbreite ergibt sich aus der Zahl der Kanäle. Die Breite eines Gel-Kanals 602 beträgt typisch 0.1-1 mm. Die Platte setzt sich aus Glas- oder Kunststoffstreifen zusammen, die durch Spacer 604 auf geeigneten Abstand gehalten werden. Die Kanalseitenflächen weisen eine optisch einwandfreie Oberfläche auf. Jeder der Glasstreifen beinhaltet einen Spiegel 603, der so in den Streifen eingelassen ist, dass Licht aus beiden Z-Richtungen in S-Richtung umgeleitet wird. Meist wird dazu ein Winkel von 45 Grad geeignet sein. Die Teile der Probenplatte sind miteinander fest verbunden, vorzugsweise durch Verkleben mit optisch geeignetem Kitt, und werden am Rand von den Haltern 605 und 606 die in Fig. 18 gezeichnet sind versteift.

Bei der Ausführungsform VI findet die Erzeugung der Gel-Matrix (Gießen) und die eigentliche Analyse in getrennten Bereichen des gleichen Hauptgerätes statt. Dies ermöglicht die Entnahme der Probenplatten zwischen Gel-Herstellung und

Gel-Anwendung, die Vorratshaltung an Gelplatten und steigert den Durchsatz des Gerätes, da im Gieß-Bereich in einer Probenplatte ein Gel aushärten und mit einer zweiten Probenplatte parallel eine Analyse gefahren werden kann. Die Reinigung der benutzten Platten findet ebenfalls im Gieß-Bereich statt.

Der Gieß-Bereich ist in Fig. 18 im Längsschnitt durch den Gelkanal gezeichnet. Die Probenplatte 601 mit den Haltern 605 und 606 wird von den beiden Gießplatten 651 und 652 eingeschlossen. Oben und unten in T-Richtung verschließen die Spacer 604 den Gelkanal 602. Die Zugänge 655, 656 und 657 ermöglichen das Befüllen des Gelkanals. Um die Probenplatte entnehmen zu können bevor das Gel ausgehärtet ist, befinden sich an den Zugängen Schieber 658, 659 und 660 mit denen diese verschlossen werden können. Diese Schieber werden von den Hilfsplatten 653 und 654 gegen die Gießplatten 651 und 652 gedrückt und dichten im eingeschobenen Zustand.

In einer anderen Ausführungsform sind die Zugänge 656 und 657 in T-Richtung länglich vergrößert, um die Höhe des Stacker-Gels zu vergrößern.

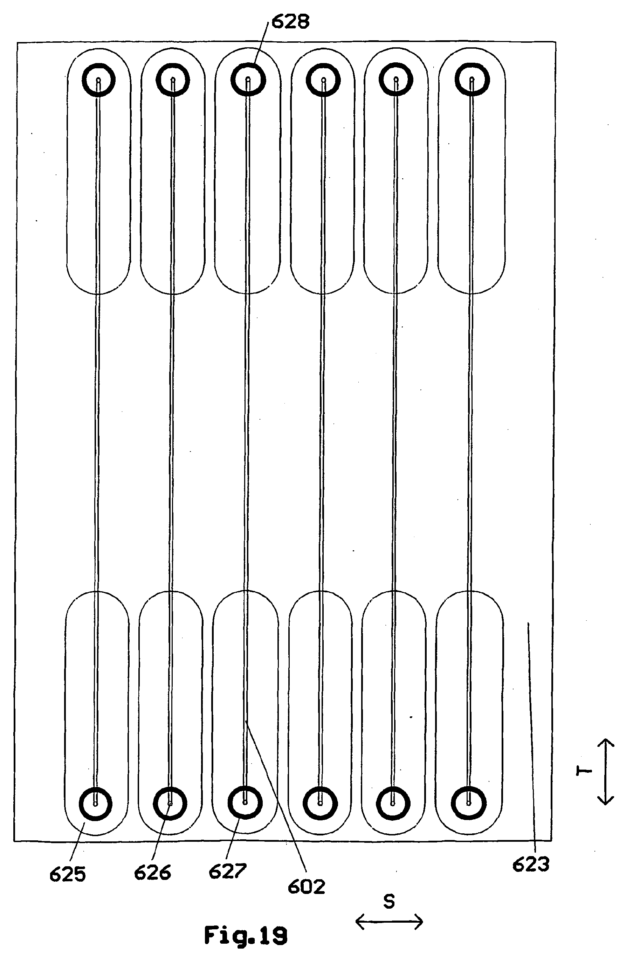

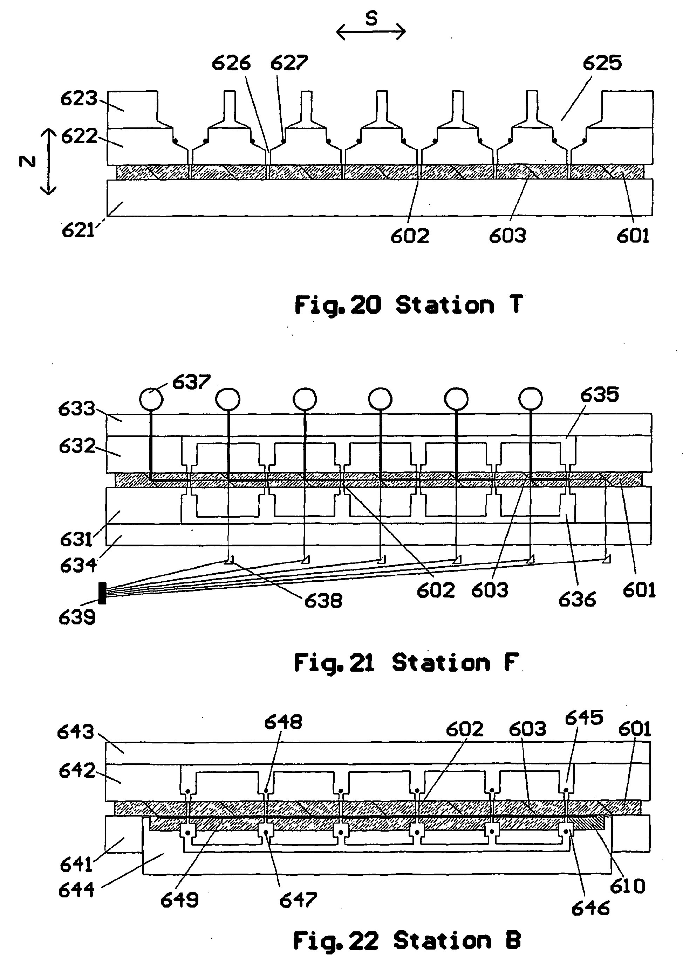

Fig. 19 zeigt die Trenn-Station des Analyse-Bereichs in Aufsicht, Fig. 20 in einer Seitenansicht. Die obere Analysenplatte 623 ist transparent, man kann daher in Fig. 19 die Kanäle 602 in der darunterliegenden Probenplatte 601 sehen. Die Wannen 625 die in die Platte 623 geschnitten sind dienen zur Aufnahme von Pufferlösung. Sie münden in die Lade-Taschen 626 der darunter liegenden 2. Schicht 622 der Analyseplatte. Darin befinden sich ringförmige Elektroden 627. Je eine komplette Wannenkonstruktion ist an beiden Enden jedes Gel-Kanals angebracht. Die untere Analysenplatte 621 liegt unterhalb der Probenplatte 601.

In Fig. 21 ist eine Färbe-Station gezeigt. Die untere Analysenplatte besteht aus 2 Schichten 634 und 631. Darauf befindet sich die Probenplatte 601. Die obere Analysenplatte mit den Schichten 632 und 633 drückt auf die Probenplatte 601. In beiden Analyseplatten ist eine Kammer integriert 635, 636, die mit jedem der Gel-Kanäle 602 in Z-Richtung verbunden ist. Von der Lichtquelle 637 fällt Licht aus der Z-Richtung auf die Spiegel 603 in der Probenplatte, das diese in S-Richtung umlenken, durch die Gel-Kanäle leiten und das von der Rückseite der Nachbarspiegel wieder in S-Richtung aus der Probeplatte herausgeleitet wird. Die weiteren Spiegel 638 reflektieren das Licht auf den Detektor 639. Im Strahlengang befindet sich noch eine nicht gezeichnete Linse. Im Detektor entstehen leicht parallel versetzte Streifen, entsprechend den Bildern der Kanäle.

Fig. 22 zeigt eine Blot-Station in einer Seitenansicht. Die obere Analysenplatte besteht aus den beiden Schichten 642, 643. Die untere Analysenplatte 641 weist einen Ausschnitt auf, in dem der Stempel 644 liegt. Er trägt die Membranplatte 610, welche in einer Vertiefung die Membran 649 enthält. Der Stempel 644 kann pneumatisch, elektrisch oder mechanisch gehoben und gesenkt werden, wodurch es möglich ist die Membran 649 gegen die Probenplatte 601 zu drücken. Dadurch besteht in Z-Richtung Kontakt zwischen dem Gel-Kanal 602 und der Membran 649. Wenn die Probenplatte zur Seite verschoben ist, kann die Membranplatte gegen die Analyseplatte 642 gedrückt werden. Wird die obere Analyseplatte 642 leicht angehoben, ist es möglich, die Membranplatte seitlich zwischen die Analyseplatten zu verschieben. In die obere Analysenplatte 642 ist eine Kammer 645 integriert, in den Stempel 644 ist eine Kammer 646 integriert. Die Öffnungen in der Membranplatte 610 verbinden die Kammer 646 mit der Unterseite der Membran. Die Kammern enthalten die Elektroden 647 und 648. Leichter Unterdruck in der Kammer 646 fixiert die Membran, leichter Überdruck drückt sie gegen die Probenplatte.

Zur Steigerung des Durchsatzes und zur Vereinfachung des Gerätes werden die Immunreaktion, die Waschschritte und die Detektion in einem getrennten Geräteteil, dem Immun-Bereich, durchgeführt. Die Membran kann dorthin automatisch transportiert werden, indem sie mittels des Stempels 644 in den Spalt zwischen den Analyseplatten eingefädelt wird. Auch der manuelle Transport ist möglich. Dies stellt keine wesentliche Beeinträchtigung des Komforts dar, da das Auftragen der Immunreagenzien im allgemeinen von Hand durchgeführt wird, um mit den teuren Reagenzien möglichst effizient umzugehen.

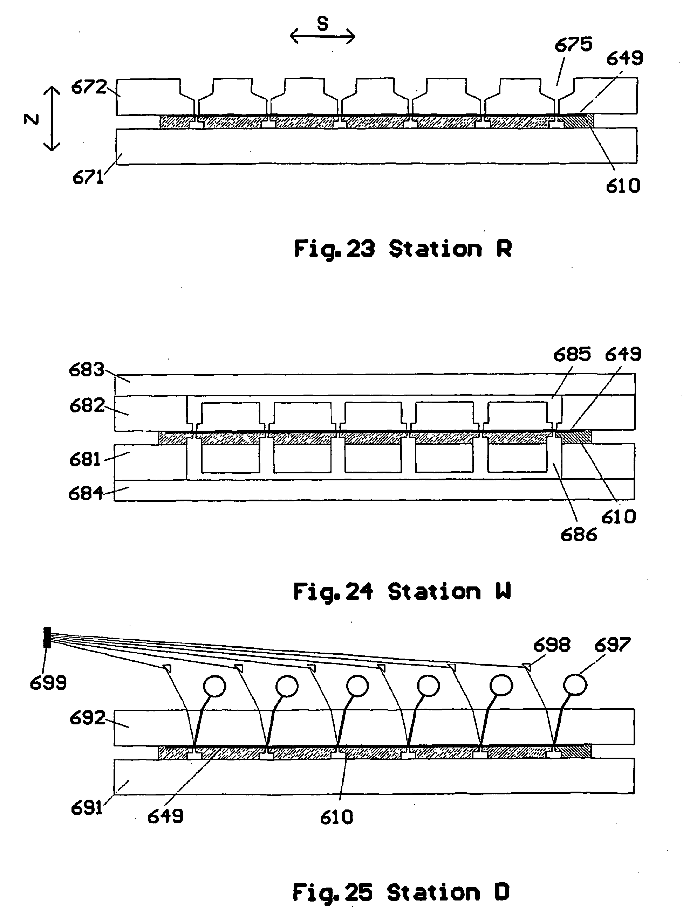

Fig. 23 zeigt die Reaktions-Station des Immun-Bereichs in einer Seitenansicht. Die Membranplatte 610 weist eine leichte Vertiefung auf in der die Membran 649 liegt. Die obere und untere Analysenplatte 671 und 672 dichten die Membranplatte. Mittels der Reagenz-Taschen 675 die sich in T-Richtung über die gesamte Länge des Matrix-Kanals oder auch nur über eine Teillänge erstrecken, kann Flüssigkeit auf die Membranplatte in dem Bereich aufgebracht werden, in dem während des Blotten der aufgetrennte Analyt in die Membran eingedrungen ist. Dies kann manuell wie automatisch geschehen.

In Fig. 24 ist eine Wasch-Station dargestellt. Die Membranplatte 610 mit der eingelegten Membran 649 wird von der oberen und unteren Analyseplatte 681 und 682 eingeschlossen und gedichtet. Die zweiten Schichten 683, 684 der oberen und unteren Analyseplatten schließen mit der ersten Schicht jeweils eine Kammer 685 und 686 ein. Die Kammern kontaktieren die Membran in dem Bereich in dem die Immunreaktion erfolgt ist von oben und unten.

In Fig. 25 ist eine Detektor-Station gezeigt. Die Membranplatte 610 mit der eingelegten Membran 649 wird von der oberen und unteren Analyseplatte 691 und 692 eingeschlossen und gedichtet. Durch die transparente Oberfläche der oberen Analyseplatte 692 wird von den Lichtquellen 697 die Membran im Bereich der Immunreaktion beleuchtet. Das reflektierte Licht wird mittels der Spiegel 698 auf den Detektor 699 gelenkt. Dort entstehen leicht parallel versetzten Streifen, welche die Bereiche der Immunreaktion abbilden.

In einer anderen Ausführungsform VII sind die Stationen R und W in die Station B integriert. Die 2. Schicht 643 der oberen Analyseplatte 642 kann hochgeklappt werden um in die Vertiefungen der Kammer 645, die wie in Station R als Reaktions-Taschen ausgebildet sind, manuell Immun-Reagenzien einfüllen zu können. Die Station D wird ersetzt durch eine Detektorplatte, die anstelle der Probenplatte 601 über der Membranplatte angeordnet wird. Dies kann erfolgen indem der Stempel in etwa mit der unteren Analyseplatte abschließt, oder wenn der Stempel so weit nach unten gefahren ist, dass zwischen der unteren Analyseplatte 641 und dem Stempel 644 ausreichend Raum bleibt. Als Detektor in der Detektorplatte kann eine Anordnung wie in Station D verwendet werden, oder ein Film, der auf der Membran belichtet wird. Die Membranplatte kann in den Stempel integriert werden.

In einer anderen Ausführungsform werden alle Analyse- und Gieß-Platten zur Unterstützung der Dichtwirkung an den Kontaktflächen mit der Probenplatte und der Membranplatte mit geeigneten Dichtungen in flächiger Form oder linienartig versehen.

### Hauptapparatur der Ausführungsform VI

In der Hauptapparatur sind der Gieß-Bereich, der Analyse-Bereich und der Immun-Bereich untergebracht. Je nach Ausführungsform werden die Probenplatte und die Membranplatte zwischen den Teil-Bereichen manuell oder automatisch transportiert. Zwischen den Stationen Trennen (T) Fig. 20, Färben (F) Fig. 21 und

Blotten (B) Fig. 22 des Analyse-Bereichs wird die Probenplatte mittels eines Schrittmotors bewegt. Die Analyseplatten der einzelnen Stationen besitzen zu diesem Zweck eine durchgehende Oberfläche. Zur Reinigung sind sie nach oben klappbar. Für jede der Kammern stehen Schläuche, Vorratsbehälter, Ventile und Pumpen zur Verfügung, um sie mit den notwendigen Reagenzien füllen und entleeren zu können. Für jeden Kanal steht eine Hochspannungsversorgung zur Verfügung, die mit den entsprechenden Elektrodenpaaren verbunden wird. Zur Reinigung der Analyseplatten sind Anschlüsse vorgesehen durch die der Zwischenraum in dem die Probenplatte verschoben wird mit Wasser und verdünnter NaOH geflutet werden kann.

Im Gieß-Bereich befindet sich eine Mischkammer zur Erzeugung des Gels. Schläuche, Pumpen, Ventile und Vorratsbehälter ermöglichen das Befüllen und Reinigen der Probenplatte.

Im Immun-Bereich wird mittels eines Schrittmotors die Membranplatte mit der eingelegten Membran zwischen der Reaktions-Station (R), der Wasch-Station (W) und der Detektor-Station (D) bewegt. Reinigungsanschlüsse sind vorgesehen. Auch hier stehen Schläuche, Pumpen, Ventile und Vorratsbehälter zur Verfügung, um die einzelnen Operationen auszuführen.

Zum Auslesen der Sensorelemente ist Auswerte-Elektronik vorgesehen. Eine Computersteuerung kontrolliert die Arbeitsabläufe.

### Messprozedur Ausführungsform VI

### Gießen der Gel-Matrix:

92) Im Gieß-Bereich wird eine Probenplatte 601 zwischen die Gel-Platten 651 und 652 eingesetzt und alle Teile durch Klemmen aneinandergepresst (manuell).
93) In der Mischkammer wird aus den gespeicherten Reagenzien Trenn-Gel erzeugt.
94) Durch den Zugang 655 wird mittels einer Pumpe aus der Mischkammer Gel im Überschuss in den Kanal 602 der Probeplatte 601 gefüllt. Dabei entweicht durch den Zugang 656 zunächst die Luft und dann überschüssiges Gel. Der Schieber 660 ist dabei geschlossen.
95) Der Zugang 655 wird mit dem Schieber 658 geschlossen, der Schieber 660 geöffnet.
96) In der Mischkammer wird Stacker-Gel erzeugt.
97) Durch den Zugang 657 wird das Stacker-Gel in den oberen Bereich des Gel-Kanals gefüllt, wo es das Lauf-Gel auf der Breite des Zugangs verdrängt.
98) Die Schieber 659 und 660 werden geschlossen.
99) Das Schlauchsystem und die Mischkammer werden mit Wasser gespült.
100) Die Probenplatte mit Gel kann während des Polymerisierens im Gerät verbleiben oder entnommen werden.
101) Nach Abschluss des Polymerisierens wurden die Klammern welche die Gieß-Platten 651, 652 an die Probenplatte drücken entfernt und die Probenplatte 601 ist gebrauchsfertig.

### Elektrophoretisch-optische Analyse:

102) Im Analyse-Bereich wird eine Probenplatte 601 mit gegossenen Gel-Kanälen in die Station T eingelegt, die obere Analyseplatte 622 wird geschlossen (manuell).
103) Die obere Analyseplatte 622 wird zum Dichten z.B. pneumatisch angedrückt.
104) Aus einer Kapillare wird in die Kammern 625 eine kleine Menge Pufferlösung gefüllt.
105) Mittels einer Pipette wird in die Lade-Vertiefungen 626 Analyt eingefüllt (manuell).
106) Aus einer Kapillare wird in die Kammern 625 die restliche Pufferlösung gefüllt.
107) An die Elektroden 627 wird geeignete Hochspannung angelegt, der Analyt wird aufgetrennt.
108) Nach Abschluss des Auftrennens wird die verbleibende Pufferlösung abgesaugt.
109) Die obere Analyseplatte 622 wird gelockert, die Probenplatte 601 in Station F verschoben und die obere Analyseplatte 632 angedrückt.
110) Aus einem Vorratsbehälter wird Färbeflüssigkeit in eine Thermostat-Kanuner geleitet.
111) Aus der Thermostat-Kammer werden die Kammern 635 und 636 sowie die Gel-Kanäle 602 im Kreislauf mit temperierter Färbeflüssigkeit gespült.
112) Die Färbeflüssigkeit wird in einen Abwasserbehälter entsorgt.
113) Aus einem Vorratsbehälter wird Entfärbeflüssigkeit in eine Thermostat-Kammer geleitet.
114) Aus der Thermostat-Kammer werden die Kammern 635 und 636 sowie die Gel-Kanäle 602 im Kreislauf mit temperierter Entfärbeflüssigkeit gespült.
115) Die Entfärbeflüssigkeit wird in einen Abwasserbehälter entsorgt.
116) Die Lichtquellen 637 werden eingeschaltet.
117) Der Detektor 639 wird ausgelesen.
118) Die Daten werden in den angeschlossenen Computer übertragen.
119) Die beteiligten Kammern werden mit Wasser nachgespült.
120) Die Analyseplatte 632 wird gelockert.
121) Die Analyseplatte 632 wird hochgeklappt, die Probenplatte entnommen (manuell).

### Elektrophoretisch-immunologische Analyse, Blotten:

122) Im Analyse-Bereich wird eine Blot-Membran 649 in den Stempel 644 eingelegt (manuell).
123) Eine Probenplatte 601 mit gegossenen Gel-Kanälen wird in die Station T eingelegt, die obere Analyseplatte 622 wird geschlossen (manuell).
124) Die obere Analyseplatte 622 wird zum Dichten z.B. pneumatisch angedrückt.
125) Aus einer Kapillare wird in die Kammern 625 eine kleine Menge Pufferlösung gefüllt.
126) Mittels einer Pipette wird in die Lade-Vertiefungen 626 Analyt eingefüllt (manuell).
127) Aus einer Kapillare wird in die Kammern 625 die restliche Pufferlösung gefüllt.
138) An die Elektroden 627 wird geeignete Hochspannung angelegt, der Analyt wird aufgetrennt.
129) Nach Abschluss des Auftrennens wird die verbleibende Pufferlösung abgesaugt.
130) Die obere Analyseplatte 622 wird gelockert, die Probenplatte 601 in Station B verschoben und die obere Analyseplatte 642 angedrückt.
131) Der Stempel 644 mit der Membranplatte 610 wird an die Probenplatte 610 angedrückt.
132) Aus einem Vorratsbehälter wird Blot-Puffer in eine Thermostat-Kammer geleitet.
133) Aus der Thermostat-Kammer werden die Kammern 645 und 646 sowie die Gel-Kanäle 602 mit temperierter Blot-Flüssigkeit gefüllt.
134) Durch leichten Unterdruck in der Kammer 647 wird sichergestellt, dass die Membran mit dem Puffer getränkt ist.
135) An die Elektroden 647 und 648 wird geeignete Hochspannung angelegt, der aufgetrennte Analyt wird in die Membran 649 transferiert.
136) Nach Abschluss des Blotten wird die obere Analyseplatte 642 gelockert.
137) Die Analysenplatte 642 wird hochgeklappt, die Probenplatte 601 wird entnommen (manuell).
138) Die Blot-Membran 649 wird entnommen (manuell).

Die Membran kann nach dem Blotten im Gerät weiterverarbeitet werden oder konventionell außerhalb des Gerätes.

Die Prozedur der Immunreaktion bei der Elektrophoretisch-immunologischen Analyse unterscheidet sich je nach Problemstellung. Es lassen sich prinzipiell 3 Schritte unterscheiden, die in wechselnder Reihenfolge mit unterschiedlichen Flüssigkeiten mehrfach wiederholt werden:
A) Immun-Reagenz auftragen.
B) Membran spülen.
C) Detektieren.

Zusätzlich bestehen Unterschiede je nach Ausführungsform VI oder VII.

### Ausführungsform VI, Immunreagenz auftragen:

139) In der Station R des Immun-Bereichs wird die Blot-Membran 649 aus dem vorhergehenden Arbeitschritt in die Membranplatte 610 eingelegt (manuell).
140) Die Analyseplatte 672 wird geschlossen (manuell).
141) Die obere Analyseplatte 672 wird zum Dichten z.B. pneumatisch angedrückt.
142) In die Reagenz-Taschen 675 wird aus einer Pipette Immunreagenz eingefüllt (manuell).
143) Die Immunreaktion findet statt.

### Ausführungsform VI, Spülen:

144) Die obere Analyseplatte 672 wird gelockert, die Probenplatte 601 in Station W verschoben und die obere Analyseplatte 682 angedrückt.
145) Aus einem Vorratsbehälter wird Waschflüssigkeit in eine Thermostat-Kammer geleitet.
146) Aus der Thermostat-Kammer werden die Kammern 685 und 686 und die Blot-Membran 649 im Kreislauf mit temperierter Waschflüssigkeit gespült.
147) Die Waschflüssigkeit wird in einen Abwasserbehälter entsorgt.
148) Die beteiligten Kammern werden mit Wasser nachgespült.

### Ausführungsform VI, Detektieren:

149) Die obere Analyseplatte 682 wird gelockert, die Membranplatte 610 in Station D verschoben und die obere Analyseplatte 692 angedrückt.
150) Die Lichtquellen 697 werden eingeschaltet.
151) Der Detektor 699 wird ausgelesen.
152) Die Daten werden in den angeschlossenen Computer übertragen.
153) Die Analyseplatte 692 wird gelockert.
154) Die Analyseplatte 692 wird hochgeklappt, die Membranplatte 610 entnommen (manuell).

### Ausführungsform VII, Immunreagenz auftragen:

155) Die Probenplatte ist entnommen. In der Station B des Analyse-Bereichs wird/bleibt die Blot-Membran 649 aus dem vorhergehenden Arbeitschritt in die Membranplatte 610 eingelegt (manuell).
156) Die Analyseplatte 642 wird geschlossen (manuell).
157) Der Stempel 644 drückt die Membran 649 zum Dichten z.B. pneumatisch an.
158) Die äußere Ebene 643 der oberen Analyseplatte wird aufgeklappt (manuell).
159) In die Reagenz-Taschen 675 wird aus einer Pipette Immunreagenz eingefüllt (manuell).
160) Die äußere Ebene 643 der oberen Analyseplatte wird zugeklappt (manuell).
161) Die Immunreaktion findet statt.
162) Das verbliebene Immunreagenz wird über die Kammer 645 abgesaugt. Ausführungsform VII, Spülen:
163) Aus einem Vorratsbehälter wird Waschflüssigkeit in eine Thermostat-Kammer geleitet.
164) Aus der Thermostat-Kammer werden die Kammern 645 und 646 und die Blot-Membran 649 im Kreislauf mit temperierter Waschflüssigkeit gespült.
165) Die Waschflüssigkeit wird in einen Abwasserbehälter entsorgt.
166) Die beteiligten Kammern werden mit Wasser nachgespült.

### Ausführungsform VII, Detektieren:

167) Der Stempel 644 wird gelockert.
168) Eine Detektorplatte wird seitlich zwischen Membranplatte 610 und obere Analyseplatte 642 geschoben.
169) Der Stempel 644 wird angedrückt.
170) Die Lichtquellen der Detektorplatte werden eingeschaltet.
171) Der Detektor der Detektorplatte wird ausgelesen.
172) Die Daten werden in den angeschlossenen Computer übertragen.
173) Der Stempel 644 wird gelockert.
174) Die Detektorplatte wird seitwärts entfernt.
175) Die Analyseplatte 642 wird hochgeklappt, die Membranplatte 610 entnommen (manuell).

Die Erfindung umfasst auch ein Komponente einer Apparatur zur Auftrennung und Detektion von Prüfsubstanzen, wie Proteine, Nukleinsäure-Fragmente oder ähnlichen Stoffe, die mindestens einen Kanal aufweist, wobei in einer Richtung A besagter Kanal erheblich ausgedehnter ist als in den beiden anderen Richtungen B und C; der Kanal mit Matrix gefüllt wird und der Kanal an einem Ende der Richtung A mit der Prüfsubstanz beladen wird und der Kanal an beiden Enden der Richtung A zur Auftrennung der Prüfsubstanzen elektrisch kontaktiert wird und der Kanal transparent abgedeckt ist in mindestens einer Richtung B1 die senkrecht steht auf der Richtung A und die Position der Prüfsubstanzen nach der Auftrennung bestimmt werden kann aus besagter Richtung B1 und der Kanal annähernd auf der gesamten Länge offen liegt in mindestens einer weiteren Richtung C1 senkrecht zur Richtung A und die Matrix in dem Kanal mit der aufgetrennten Prüfsubstanz gleichzeitig auf annähernd der gesamten Länge aus besagter Richtung C1 mit Flüssigkeiten gespült werden kann, ohne die Position der Matrix in der Komponente zu verändern.

Der Kanal kann in einer weiteren Richtung C2 ganz oder teilweise frei liegen, die zu der Richtung C1 entgegengesetzt ist.

Die besagte Richtung C1, in der der Kanal offen liegt, kann hierbei senkrecht stehen auf besagter Richtung B1, in der die Position der aufgetrennten Prüfsubstanzen bestimmt wird.

In einer weiteren Richtung B2, die zu der Richtung B1 entgegengesetzt ist, kann der Kanal transparent abgedeckt sein, und in der in Kombination mit der Richtung B1 können Transmissionsmessungen möglich sein. Die Ausdehnung des Kanals in Richtung A kann zwischen 5 und 250 mm liegen; die Ausdehnung des Kanals in den Richtungen B und C kann zwischen 0.01 und 10 mm liegen. Die Position der aufgetrennten Prüfsubstanz kann bestimmt werden durch die Veränderungen der Transmission oder Reflexion oder Emission oder Konversion von Licht oder der Emission von radioaktiver Strahlung oder der Leitfähigkeit oder des pH-Wertes.

Die Auftrennung der Prüfsubstanzen kann elektrophoretisch durch Anlegen von Strom in Richtung
A erfolgen.

Die Auftrennung der Prüfsubstanzen kann auch durch isoelektrische Fokussierung unter Anlegen von Strom in Richtung A erfolgen.

In Richtung C1 und/oder C2 kann eine Membran an die Matrix gedrückt werden und durch einen weiteren Strom und/oder durch einen Druckunterschied und/oder durch ein Konzentrationsgefälle kann die Prüfsubstanz auf diese Membran transferiert werden. In Richtung C1 und/oder C2 kann an besagte Matrix eine weitere Matrix mit der Stirnseite gedrückt werden, und durch einen weiteren Strom kann die Prüfsubstanz auf besagte 2. Matrix transferiert werden.

Der Kanal kann in einem steifen Träger untergebracht sein, der es ermöglicht, den Kanal in der Richtung C1 bzw. C2 quer zu den Platten durch Dichtelemente zeitlich begrenzt wasserdicht zu verschließen, und der Kanal kann an den beiden Enden der Richtung A durch geeignete Formung besagten Trägers für Flüssigkeiten zugänglich sein, ohne die seitlichen Dichtelemente zu beeinflussen, und über besagte Flüssigkeit kann der Kanal elektrisch kontaktiert werden.

Die genannte Komponente kann so gestaltet sein, dass der Kanal in Richtung B1 bzw. B2 zwischen zwei optisch transparenten Platten mit hoher mechanische Steifigkeit angeordnet die es ermöglichen den Kanal in der Richtung C1 bzw. C2 quer zu den Platten durch Dichtelemente zeitlich begrenzt wasserdicht zu verschließen und der Kanal an den beiden Enden der Richtung A durch geeignete Endstücke für Flüssigkeiten zugänglich ist ohne die seitlichen Dichtelemente zu beeinflussen und über besagte Flüssigkeit der Kanal elektrisch kontaktiert werden kann.

Besagte Platten können in Richtung von dem Kanal weg wesentlich weiter ausgedehnt sein, als es der Dicke der Platten und der Dicke des Kanals entspricht. Eines oder beide der besagten Dichtelemente können in gedichteten Kammern untergebracht sein, die die Zufuhr von Flüssigkeiten zu dem Kanal von einer oder beiden Seiten ermöglichen. Besagter Kanal kann als Schlitz in einer Platte untergebracht sein. Die besagte Platte kann optisch transparent sein. Besagter Kanal kann an beiden Enden innerhalb besagter Platte enden und von der Ebene senkrecht zu der Platte aus für Flüssigkeiten zugänglich sein. In besagter Platte können ein oder zwei optische Elemente untergebracht sein, die den Strahlengang aus der Plattenebene in Richtung senkrecht dazu umleiten. Besagte Platte kann aus 2 Teilen zusammengesetzt sein, die entlang des Schlitzes getrennt sind. Besagte optische Elemente können eingefügt werden, indem besagte Platte unter 45 Grad getrennt, metallisch bedampf und wieder zusammengefügt werden. Besagte Platte kann so plan sein, dass besagter Schlitz durch weitere Platten, die flächig von beiden Seiten angedrückt werden, gedichtet werden kann.

Die genannte Komponente kann so gestaltet sein, dass in besagter Platte weitere Schlitze untergebracht sind, die auch quer zu besagte Kanal verlaufen; ferner auch so, dass zwei oder mehrere Platten so miteinander verbunden werden können, so dass alle Platten gemeinsam bewegt werden können.

Die Erfindung umfasst auch einen Mechanismus zum Transport von Stoffen oder Materialien zwischen Bearbeitungs-Stationen, wobei in einer Platte, der Probenplatte, die erheblich dünner ist als breit und lang, einer oder mehrere Hohlräume angeordnet sind und besagte Hohlräume zu einer oder beiden Flächen der Probenplatte hin geöffnet sind und besagte Probenplatte verschiebbar zwischen zwei weiteren Platten, den Analyseplatten, angeordnet ist, die alle oder einen Teil der Hohlräume der Probenplatte durch temporäres Anpressen wasserdicht abschließen und an zwei oder mehreren Stationen an den Analyseplatten geeignete Sensoren und/oder Manipulatoren angeordnet sind die auf die Hohlräume und/oder andere Teile der Platte und/oder deren Inhalt einwirken und/oder diesen detektieren. Die Hohlräume können hierbei Schlitze sein, die bevorzugt quer zur Transportrichtung verlaufen. Alle oder ein Teil besagter Hohlräume können ganz oder teilweise mit Gel-Matrix gefüllt werden.

In den Hohlräumen können Prüfsubstanzen wie Proteine, Nukleinsäure-Fragmente oder ähnliche Stoffe transportiert werden. Die Probenplatte kann auch mit weiteren Probenplatten gleicher oder ähnlicher Konstruktion so verbunden sein, dass alle Probenplatten gemeinsam zu den verschiedenen Stationen verschoben werden können.

Ferner umfasst die Erfindung eine verschiebbare Probenplatte für einen Transportmechanismus, wobei in die Probenplatte optische Elemente eingelassen sind, die die Beobachtung des Inhalts der Hohlräume in der Fläche der Probenplatten aus einer Position senkrecht zu den Probenplatten erlauben. In die Probenplatte Durchbrüche können eingelassen sein, die die Reinigung der Kapillaren in den

Stationen erlauben. In die Probenplatte können eine oder mehrere Wannen mit ähnlicher Länge wie besagte Schlitze eingelassen sein, die eine geringere Tiefe aufweisen als es der Dicke besagter Probenplatte entspricht. Die Wannen können mit einem Durchbruch in der Bodenfläche versehen sein, der die Bodenfläche ganz oder teilweise umfasst. Die Wannen können für die Aufnahme und den Transport einer Membran geeignet sein.

Die Erfindung umfasst auch eine Station für den oben genannten Transportmechanismus, wobei aus Kapillaren nicht polymerisierte Elektrophorese-Matrix in einen oder mehrere der Hohlräume der Probenplatte gefüllt werden kann. Hierbei können geeignete Elemente und Durchbrüche angeordnet sein, die das Laden der Matrix mit der Prüfsubstanz, und/oder das Einfüllen von Elektrolyse-Puffer, und/oder die elektrophoretische Auftrennung, und/oder die Auftrennung durch isoeleklrische Fokussierung und/oder die optische Detektion der Lauffront erlauben.

Es können geeignete Elemente und Durchbrüche angeordnet sein, die das Färben und/oder Entfärben der Matrix erlauben und/oder die optische Auswertung des Elektrophorese-Bildes mittels der in die Probenplatte integrierten optischen Elemente. Es können geeignete Elemente und Durchbrüche angeordnet sind, die die Auswertung des Elektrophorese-Bildes in der Matrix mittels Licht-Transmission oder Licht-Reflexion oder Licht-Emission oder Fluoreszenz oder radioaktiver Strahlung oder sonstiger Methoden erlauben. Es können geeignete Elemente und Durchbrüche angeordnet sein, die das Transferieren der aufgespalteten Prüfsubstanz in eine Membran mittels Strom, und/oder durch Druckunterschied und/oder durch Konzentrationsunterschied erlauben. Es können auch geeignete Elemente und Durchbrüche angeordnet sein, die das Transferieren der aufgespalteten Prüfsubstanz in eine Matrix-Platte mittels Strom erlauben, in der weitere Elektrophorese in einer Richtung senkrecht zur Richtung der ersten Elektrophorese stattfinden kann.

Die Station für einen Transportmechanismus kann auch so gestaltet sein, dass eine Membran in einer Wanne der Probenplatte zum Transport abgelegt werden kann. Die Station für einen Transportmechanismus kann ferner auch so gestaltet sein, dass auf der gesamte Länge oder einen Teilbereich eine Membran in einer Wanne der Probenplatte von einer und/oder zwei Seiten mit einer Flüssigkeit in Kontakt gebracht werden kann. Durch die gesamte Länge oder einen Teilbereich einer Membran, die in einer Wanne der Probenplatte liegt, kann mittels eines Drukkunterschieds auf beiden Seiten der Membran Flüssigkeit gepresst werden. Eine Membran kann auf die Produkte einer Immunreaktion untersucht werden, und zwar durch Messung der Transmission oder Reflexion oder Emission oder Konversion von Licht oder der Emission von radioaktiver Strahlung oder der Leitfähigkeit oder des pH-Wertes.

### Bezeichnungsliste:

- 1: Probenplatte
- 2: Gel-Kanal, Trennkammer
- 3: Spiegel
- 4: Schlitz
- 5: Schlitz / Wanne / Vertiefung
- 8: unter Analysenplatte
- 9: obere Analysenplatte
- 10: Zufluss
- 11: Abfluss
- 12: Zufluss
- 13: Abfluss
- 14: Stempel
- 20: Trichter
- 21: Trichter
- 22: Wärmetauscher
- 30: Kammer
- 31: Kammer
- 32: Wärmetauscher
- 33: Wärmetauscher
- 34: Detektor
- 35: Linse
- 36: Lichtquelle
- 37: Lichtquelle
- 40: Membran
- 41: Stempel
- 42: Wanne
- 43: Kammer
- 44: Wärmetauscher
- 50: Kammer
- 51: Wanne
- 60: Sensor
- 61: Linse
- 101: Trennkammer / Gelkanal
- 102: Glasplatte / Stützelement
- 103: Glasplatte / Stützelement
- 104: Kammer
- 105: Kammer
- 106: Endstück / Austrittsöffnung
- 107: Endstück / Trichter
- 110: Platte
- 111: Dichtung
- 112: Stab / Stempel
- 120: Platte
- 121: Dichtung
- 122: Stab /Stempel
- 124: Deckel
- 130: Sensor
- 132: Lichtquelle
- 133: Spiegel
- 210: Endplatte
- 211: Flügel
- 212: Flügel
- 213: Endplatte
- 214: Gelkanal
- 215: Glasplatte /Stützelemente
- 216: Flügel
- 217: Flügel
- 224: Kapillare
- 225: Dichtwanne des Hauptgerätes
- 226: Dichtwanne des Hauptgerätes
- 227: Flüssigkeitseinlass des Hauptgerätes
- 228: Flüssigkeitseinlass des Hauptgerätes
- 230: Kammer des Trägers
- 231: Kammer des Trägers
- 232: Reservoir
- 233: Tank
- 240: Stempel
- 241: Blotmembran
- 242: Kanal des Stempels
- 310: Endplatte des Trägers
- 311: Flügel
- 312: Flügel
- 313: Endplatte des Sticks
- 314: Gelkanal
- 315: Glasplatte /Stützelement
- 316: Flügel
- 317: Flügel
- 321: Dichtplatten des Hauptgerätes
- 322: Dichtplatten des Hauptgerätes
- 327: Anschlüsse des Hauptgerätes
- 328: Anschlüsse des Hauptgerätes
- 329: Kapillare
- 330: Kammer des Trägers
- 331: Kammer des Trägers
- 332: Reservoir
- 333: Tank
- 334: Sichtzugang zum Gelkanal
- 335: Sichtzugang zum Gelkanal
- 601: Probenplatte
- 602: Gel-Kanal, Trennkammer
- 603: Spiegel
- 604: Spacer
- 605: Halter
- 606: Halter
- 610: Membranplatte
- 621: untere Analysenplatte
- 622: obere Analysenplatte
- 623: obere Analysenplatte 2. Schicht
- 625: Wanne
- 626: Ladetasche
- 627: Elektrode
- 628: Elektrode
- 631: untere Analysenplatte
- 632: obere Analysenplatte
- 634: obere Analysenplatte 2. Schicht
- 635: Kammer
- 636: Kammer
- 637: Lichtquelle
- 638: Spiegel
- 639: Detektor
- 641: untere Analysenplatte
- 642: obere Analysenplatte
- 643: obere Analysenplatte 2. Schicht
- 644: Blot-Stempel
- 645: Kammer
- 646: Kammer
- 647: Elektrode
- 648: Elektrode
- 649: Membran
- 651: Gieß-Platte
- 652: Gieß-Platte
- 653: Hilfsplatte
- 654: Hilfsplatte
- 655: Zugang
- 656: Zugang
- 657: Zugang
- 658: Schieber
- 659: Schieber
- 660: Schieber
- 671: untere Analysenplatte
- 672: obere Analysenplatte
- 675: Reagenz-Tasche
- 681: untere Analysenplatte
- 682: obere Analysenplatte
- 683: obere Analysenplatte 2. Schicht
- 684: untere Analysenplatte 2. Schicht
- 685: Kammer
- 691: untere Analysenplatte
- 692: obere Analysenplatte
- 697: Lichtquelle
- 698: Spiegel
- 699: Detektor

## Patentansprüche

1. Vorrichtung zur automatischen Analyse der Bestandteile mindestens eines Analyten, insbesondere mittels Gel-Elektrophorese und/oder isoelektrischer Fokussierung, mittels mindestens einer Trennmatrix, insbesondere einem Gel,
wobei die Vorrichtung derart ausgestaltet ist, dass
jede Trennmatrix
zumindest auf einer Seite in einer Stützrichtung (S) von einem Stützelement (1, 601) getragen wird,
mit einem Analyten beladbar (626) ist und
in einer Trennrichtung (T) zur Auftrennung des Analyten in seine Bestandteile an entgegen gesetzten Enden elektrisch kontaktierbar (20, 21, 627, 628) ist,
wobei
das Stützelement (1, 601) zumindest einen Kanal (2, 602) aufweist, der die zumindest eine Trennmatrix aufnimmt, wobei das Stützelement (1, 601) aus der Stützrichtung (S) an der Trennmatrix anliegt und die Trennmatrix stabilisiert;
wobei in Stützrichtung (S) die Trennmatrix von beiden Seiten von einem Stützelement (601) begrenzt wird;
eine untere Analyseplatte (8, 612, 631, 641) und eine obere Analyseplatte (9, 622, 632, 642) vorhanden ist, von welchen das Stützelement (1, 601) einscbließbar ist,
wobei die Analyseplatten (8, 612, 631, 641; 9, 622, 632, 642) so eng an das Stützelement pressbar sind, dass der zumindest eine Kanal (2, 602) des Stützelements wasserdicht abgeschlossen wird, soweit nicht entsprechende Durchbrüche in den Analyseplatten (8, 612, 631, 641; 9, 622, 632, 642) vorhanden sind,
wobei das Stützelement (1, 601) derart ausgebildet ist,
dass es von beiden Seiten, und zwar in einer Zugangsrichtung (Z), die von der Stützrichtung (S) und der Trennrichtung (T) verschieden ist, im Wesentlichen über den gesamten Bereich der Trennmatrix, in welchem sich die Bestandteile des Analyten nach Auftrennen befinden, jeweils einen Stoffaustauschvorgang ermöglicht und
das Stützelement (1, 601) auf beiden Seiten in der Zugangsrichtung (Z) jeweils eine durchgehende Dichtfläche aufweist, die den jeweiligen Stoffaustauschvorgang außerhalb des Bereichs im Wesentlichen verhindert.

2. Vorrichtung nach Anspruch 1, **dadurch gekennzeichnet, dass** für jeden Analyten eine separate Trennmatrix zur Verfügung steht.

3. Vorrichtung nach Anspruch 1 oder 2, **dadurch gekennzeichnet, dass** von beiden Seiten der Zugangsrichtung (Z) Einrichtungen zur elektrischen Kontaktierung (647, 648) der Trennmatrix vorgesehen sind, insbesondere zum Transfer der aufgetrennten Bestandteile des Analyten auf eine Membran (649).

4. Vorrichtung nach einem der Ansprüche 1 bis 3, **dadurch gekennzeichnet, dass** in Zugangsrichtung (Z) und/oder Stützrichtung (S) Mittel zur Messung von Reflexion oder Transmission (637, 638, 639) der Trennmatrix vorgesehen sind.

5. Vorrichtung nach einem der Ansprüche 1 bis 4, **dadurch gekennzeichnet, dass** die Trennrichtung (T), die Stützrichtung (S) und die Zugangsrichtung (Z) im Wesentlichen senkrecht aufeinander stehen.

6. Vorrichtung nach einem der Ansprüche 1 bis 5, **dadurch gekennzeichnet, dass** mindestens eine weitere Trennmatrix mit der mindestens einen Trennmatrix in Kontakt gebracht werden kann, in die die Bestandteile des Analyten transferiert werden können.

7. Vorrichtung nach einem der Ansprüche 1 bis 6, **dadurch gekennzeichnet, dass** in Zugangsrichtung (Z) eine Membran (649) mit der mindestens einen Trennmatrix in Kontakt gebracht werden kann, auf die die Bestandteile des Analyten transferiert werden können.

8. Verfahren zur automatischen Analyse der Bestandteile mindestens eines Analyten, insbesondere mittels Gel-Elektrophorese und/oder isoelektrischer Fokussierung, mit mindestens einer Trennmatrix, insbesondere einem Gel, wobei jede Trennmatrix
zumindest auf einer Seite in einer Stützrichtung (S) von einem Stützelement (601) stabilisiert wird und wobei das Stützelement (1, 601) aus der Stützrichtung (S) an der Trennmatrix anliegt und die Trennmatrix stabilisiert,
wobei in Stützrichtung (S) die Trennmatrix von beiden Seiten von einem Stützelement (601) begrenzt wird,
mit einem Analyten beladen (626) wird und
in einer Trennrichtung (T) zur Auftrennung des Analyten in seine Bestandteile an entgegengesetzten Enden elektrisch kontaktiert (627, 628) wird,
ein Stoffaustauschvorgang vorgenommen wird mit Hilfe des Stützelements (315, 215, 102, 1, 601), das derart ausgebildet ist, dass es von einer Seite, in einer Zugangsrichtung (Z), die von der Stützrichtung (S) und der Trennrichtung (T) verschieden ist, im Wesentlichen über den gesamten Bereich der Trennmatrix (314, 214, 101, 2, 602) in welchem sich die Bestandteile des Analyten nach Auftrennen befinden, diesen ermöglicht und
wobei
das Stützelement (315, 215, 102, 1, 601) eine durchgehende Dichtfläche aufweist, die diesen Stoffaustauschvorgang außerhalb dieses Bereichs im Wesentlichen verhindert.

9. Verfahren nach Anspruch 8, **dadurch gekennzeichnet, dass** von beiden Seiten in der Zugangsrichtung (Z) die Trennmatrix elektrisch kontaktiert wird (647, 648), insbesondere zum Transfer der aufgetrennten Bestandteile des Analyten auf eine Membran (649).

10. Verfahren nach Anspruch 8 oder 9, **dadurch gekennzeichnet, dass** von beiden Seiten der Zugangsrichtung (Z) mit der Trennmatrix jeweils ein Stoffaustauschvorgang erfolgt, insbesondere zum Färben, Entfärben und Umpuffern.

11. Verfahren nach einem der Ansprüche 8 bis 10, wobei die Position der aufgetrennten Bestandteile des Analyten bestimmt wird, indem die Veränderungen der Transmission oder Reflexion oder Emission oder Konversion von Licht oder der Emission von radioaktiver Strahlung oder der Leitfähigkeit oder des pH-Wertes gemessen wird.

12. Verfahren nach einem der Ansprüche 8 bis 11, wobei die Trennmatrix in einer Struktur verschoben wird, die es gestattet, nacheinander einen Teil oder alle nachfolgender Operationen an der Trennmatrix durchzuführen:
- in beiden Zugangsrichtungen für Flüssigkeiten abdichten,
- in beiden Zugangsrichtungen für Flüssigkeiten zugänglich machen,
- in mindestens einer Zugangsrichtung mit einer Membran in Kontakt bringen,
- in mindestens einer Zugangsrichtung flächig mit einer Elektrode in Kontakt bringen,
- in mindestens einer Zugangsrichtung mit einer weiteren Trennmatrix in Kontakt, bringen,
- an den Enden der Trennrichtung in Zugangsrichtung und/oder in Trennrichtung elektrisch kontaktieren,
- in Stützrichtung optisch analysieren,
- in Zugangsrichtung optisch analysierten.

## Claims

1. Device for automatic analysis of the components of at least one analyte, in particular by means of gel electrophoresis and/or isoelectric focussing, by means of at least one separation matrix, in particular a gel,
the device being adapted such that
each separation matrix
is supported on at least one side in a support direction (S) by a support element (1, 601),
is loadable with an analyte (626) and
is electrically contactable at opposite ends (20, 21, 627, 628) in a separation direction (T) for separation of the analyte into its components,
wherein
the support element (1, 601) comprises at least one channel (2, 602) which accommodates the at least one separation matrix, whereby the support element (1, 601) abuts from the support direction (S) against the separation matrix and stabilizes the separation matrix;
wherein in support direction (S) the separation matrix is confined on both sides by a support element (601);
a lower analyse plate (8, 612, 631, 641) and an upper analyse plate (9, 622, 632, 642) is provided by which the support element (1, 601) can be enclosed,
whereby the analyse plates (8, 612, 631, 641; 9, 622, 632, 642) are pressable so tight that the at least one channel (2, 602) of the support element is closed water tight unless the corresponding slits in the analyse plates (8, 612, 631, 641; 9, 622, 632, 642) are present,
whereby the support element (1, 601) is adapted such
that it respectively allows for a mass transfer process from both sides, namely in an access direction (Z), which is different from the support direction (S) and from the separation direction (T), substantially over the entire area of the separation matrix in which the components of the analyte are comprised after separation, and
the support element (1, 601) has a respective continuous sealing face on both sides in the access direction (Z), substantially preventing the respective mass transfer process outside this area.

2. Device according to claim 1, **characterized in that** a separate separation matrix is available for each analyte.

3. Device according to claims 1 or 2, **characterized in that** means for electrical contacting (647, 648) the separation matrix are provided on both sides in access direction (Z), in particular for transfer of the separated components of the analyte to a membrane (649).

4. Device according to any of claims 1 to 3, **characterized in that** means for measuring the reflection or transmission (637, 638, 639) of the separation matrix are provided in access direction (Z) and/or support direction (S).

5. Device according to any of claims 1 to 4, **characterized in that** the separation direction (T), the support direction (S), and the access direction (Z) are substantially perpendicular with respect to each other.

6. Device according to any of claims 1 to 5, **characterized in that** at least one further separation matrix can be brought into contact with the at least one separation matrix, into which the components of the analyte can be transferred.

7. Device according to any of claims 1 to 6, **characterized in that** a membrane (649) can be brought into contact with the at least one separation matrix in access direction (Z), onto which the components of the analyte can be transferred.

8. Method for automatic analysis of the components of at least one analyte, in particular by means of gel electrophoresis and/or isoelectric focussing, having at least one separation matrix, in particular a gel, whereby each separation matrix
is stabilized on at least one side in a support direction (S) by a support element (601), and whereby the support element (1, 601) abuts from the support direction (S) against the separation matrix and stabilises the separation matrix,
whereby in support direction (S) the separation matrix is confined on both sides by a support element (601),
is loaded with an analyte (626), and
is contacted electrically (627, 628) in a separation direction (T) for separation of the analyte into its components, at opposite ends,
a mass transfer process is conducted with the aid of a support element (315, 215, 102, 1, 601), which is formed such that it enables the same from one side in an access direction (Z) being different from the support direction (S) and the separation direction (T), substantially over the entire area of the separation matrix (314, 214, 101, 2, 602), in which the components of the analyte are comprised after separation, and
whereby
the support element (315, 215, 102, 1, 601), has a continuous sealing face, substantially preventing this mass transfer process outside this area.

9. Method according to claim 8, **characterized in that** the separation matrix can be contacted electrically (647, 648) on both sides in access direction (Z), in particular for transfer of the separated components of the analyte onto the membrane (649).

10. Method according to claim 8 or 9, whereby a mass transfer process is performed respectively on both sides of the access direction (Z) with the separation matrix, in particular for staining, de-staining and buffering.

11. Method according to any of claims 8 to 10, whereby the position of the separated components of the analyte is determined in that the changes of the transmission or reflection or emission or conversion of light or the emission of radio active radiation or the conductivity or the pH-value is measured.

12. Method according to any of claims 8 to 11, whereby the separation matrix is displaced in a structure which allows for carrying out subsequently some or all of the following operations at the separation matrix:
- sealing in both access directions for liquids,
- making accessible in both access directions for liquids,
- contacting with a membrane in at least one access direction,
- contacting two-dimensionally in at least one access direction with an electrode,
- contacting in at least one access direction with a further separation matrix,
- electrically contacting at the ends of the separation direction in access direction and/or in separation direction,
- analysing optically in support direction,
- analysing optically in access direction.

## Revendications

1. Dispositif pour l'analyse automatique des composants d'au moins un analyte, en particulier par électrophorèse de gel et/ou focalisation isoélectrique, au moyen d'au moins une matrice de séparation, en particulier un gel,
le dispositif étant conformé de telle façon que
chaque matrice de séparation
est portée au moins d'un côté dans une direction de soutien (S) par un élément de support (1, 601),
peut être chargée avec un analyte (626) et
peut être contactée électriquement (20, 21, 627, 628) dans une direction de séparation (T) pour la séparation de l'analyte dans ses composants à des extrémités opposées,
où
l'élément de support (1, 601) présente au moins un canal (2, 602), qui accueille ladite au moins une matrice de séparation, l'élément de support (1, 601) adhérant à la direction de soutien (S) à la matrice de séparation en stabilisant la matrice de séparation;
où dans la direction de soutien (S) la matrice de séparation est limitée des deux côtés par un élément de support (601);
une plaque d'analyse inférieure (8, 612, 631, 641) et une plaque d'analyse supérieure (9, 622, 632, 642) sont présentes, par lesquelles l'élément de support (1, 601) peut être inclus,
où les plaques d'analyse (8, 612, 631, 641; 9, 622, 632, 642) peuvent être pressées si étroitement contre l'élément de support qu'au moins un canal (2, 602) de l'élément de soutien est fermé de façon imperméable à l'eau, s'il n'y a pas d'ouvertures correspondantes dans les plaques d'analyse (8, 612, 631, 641; 9, 622, 632, 642),
où l'élément de support (1, 601) est formé de telle façon
qu'il permets des deux côtés, plus précisément dans une direction d'accès (Z) qui est différente de la direction de soutien (S) et de la direction de séparation (T), pour l'essentiel sur l'entière zone de la matrice de séparation, dans laquelle se trouvent les composants de l'analyte après la séparation, respectivement une opération d'échange de matière et
l'élément de support (1, 601) présente des deux côtés dans la direction d'accès (Z) respectivement une surface d'appui continue, qui empêche essentiellement l'opération d'échange respectif de matière à l'extérieur du secteur.

2. Dispositif selon la revendication 1, **caractérisé en ce que** pour chaque analyte une matrice de séparation séparée est à disposition.

3. Dispositif selon la revendication 1 ou 2, **caractérisé en ce que** des deux côtés de la direction d'accès (Z), des dispositifs pour contacter électriquement (647, 648) la matrice de séparation sont prévus, en particulier pour le transfert des composants séparés de l'analyte à une membrane (649).

4. Dispositif selon l'une des revendications 1 à 3, **caractérisé en ce que** dans la direction d'accès (Z) et/ou direction de soutien (S), des moyens pour la mesure de la réflexion ou transmission (637, 638, 639) de la matrice de séparation sont prévus.

5. Dispositif selon l'une des revendications 1 à 4, **caractérisé en ce que** la direction de séparation (T), la direction de soutien (S) et la direction d'accès (Z) se trouvent pour l'essentiel verticalement l'une sur l'autre.

6. Dispositif selon l'une des revendications 1 à 5, **caractérisé en ce qu'**au moins une autre matrice de séparation peut être mise en contact avec ladite au moins une matrice de séparation, dans laquelle les composants de l'analyte peuvent être transférés.

7. Dispositif selon l'une des revendications 1 à 6, **caractérisé en ce que** dans la direction d'accès (Z) une membrane (649) peut être mise en contact avec ladite au moins une matrice de séparation, sur laquelle les composants de l'analyte peuvent être transférés.

8. Procédé pour l'analyse automatique des composants d'au moins un analyte, en particulier par électrophorèse de gel et/ou focalisation isoélectrique, avec au moins une matrice de séparation, en particulier un gel, où chaque matrice de séparation
au moins d'un côté dans une direction de soutien (S) est stabilisée par un élément de soutien (601) et où l'élément de soutien (1, 601) de la direction de soutien (S) adhère à la matrice de séparation et stabilise la matrice de séparation,
où dans la direction de soutien (S) la matrice de séparation est limitée des deux côtés par un élément de soutien (601),
est chargée avec un analyte (626) et
dans une direction de séparation (T) pour la séparation de l'analyte dans ses composants est électriquement contactée à des extrémités opposées (627, 628),
une opération d'échange de matière est exécutée à l'aide de l'élément de soutien (315, 215, 102, 1, 601), qui est formé de telle façon qu'il la permets d'un côté, dans une direction d'accès (Z) qui est différente de la direction de soutien (S) et de la direction de séparation (T), essentiellement sur l'entière zone de la matrice de séparation (314, 214, 101, 2, 602) dans laquelle se trouvent les composants de l'analyte après la séparation, et
où
l'élément de soutien (315, 215, 102, 1, 601) présente une surface d'appui continue, qui empêche essentiellement cette opération d'échange de matière à l'extérieur de lette zone.

9. Procédé selon la revendication 8, **caractérisé en ce que** des deux côtés dans la direction d'accès (Z) la matrice de séparation (647, 648) est contactée électriquement, en particulier pour le transfert des composants séparés de l'analyte à une membrane (649).

10. Procédé selon la revendication 8 ou 9, **caractérisé en ce que** des deux côtés de la direction d'accès (Z) respectivement une opération d'échange de matière a lieu avec la matrice de séparation, en particulier pour la coloration, décoloration et le retamponnage.

11. Procédé selon l'une des revendications 8 à 10, où la position des composants séparés de l'analyte est déterminée en mesurant les variations de la transmission ou réflexion ou émission ou conversion de lumière ou de l'émission de radiation radioactive ou de la conductivité ou de la valeur pH.

12. Procédé selon l'une des revendications 8 à 11, où la matrice de séparation est déplacée dans une structure qui permet d'effectuer l'une après l'autre une partie des opérations ou toutes les opérations subséquentes sur la matrice de séparation :
- imperméabiliser aux liquides dans les deux directions d'accès,
- rendre accessible aux liquides dans les deux directions d'accès,
- mettre en contact avec une membrane dans au moins une direction d'accès,
- mettre en contact avec une électrode sur toute la surface dans au moins une direction d'accès,
- dans au moins une direction d'accès mettre en contact avec une ultérieure matrice de séparation,
- contacter électriquement aux extrémités de la direction de séparation dans la direction d'accès et/ou dans la direction de séparation,
- analyser optiquement dans la direction de soutien,
- analyser optiquement dans la direction d'accès.
